# EUROPEAN PATENT SPECIFICATION

(11) **EP 3 843 655 B1**
(45) Date of publication and mention of the grant of the patent: **07.06.2023**
(21) Application number: 19853810.0
(22) Date of filing: 27.08.2019
(51) Int. Cl.: A61C 1/08, A61C 8/00, B33Y 80/00

(54) **APPARATUS FOR ZYGOMATIC IMPLANTATION AND METHOD**
VORRICHTUNG ZUR ZYGOMATISCHEN IMPLANTATION UND VERFAHREN
APPAREIL D'IMPLANTATION ZYGOMATIQUE ET PROCÉDÉ

(30) Priority: 30.08.2018 IL 26149418
(43) Date of publication of application: 07.07.2021
(73) Proprietor: Noris Medical Ltd., 3688808 Israel (IL)
(72) Inventor: SIEV, Aharon, 3268728 Haifa (IL); SIEV, Rami, 3268728 Haifa (IL)
(74) Representative: Glück Kritzenberger Patentanwälte PartGmbB
(86) International application number: PCT/IL2019/050956
(87) International publication number: WO 2020/044335

(56) References cited:
- WO-A1-2020/008423
- DE-U1-202007 019 592
- US-A- 4 257 411
- US-A1- 2010 256 649
- US-A1- 2011 177 469
- US-A1- 2011 183 291
- CHOW J: "A novel device for template-guided surgery of the zygomatic implants", INTERNATIONAL JOURNAL OF ORAL AND MAXILLOFACIAL SURGERY, COPENHAGEN, DK, vol. 45, no. 10, 24 June 2016 (2016-06-24) , pages 1253-1255, XP029733913, ISSN: 0901-5027, DOI: 10.1016/J.IJOM.2016.06.007
- CHOW, J: "A novel device for template-guided surgery of the zygomatic implants", INT. JOURNAL OF ORAL AND MAXILLOFACIAL SURGERY , 2016, vol. 45, 24 June 2016 (2016-06-24), pages 1253-1255, XP029733913, DOI: 10.1016/j.ijom.2016.06.007
- norismedical: "Zygomatic Implant Guided Surgery 4:33", Youtube , 11 March 2015 (2015-03-11), XP054981390, Retrieved from the Internet: URL:https://www.youtube.com/watch?v=TGBxbP 9aa2g [retrieved on 2019-11-20]
- CHRCANOVIC B. et al.: "Zygomatic implants: a critical review of the surgical techniques", JOURNAL OF ORAL AND MAXILLOFACIAL SURGERY, vol. 17, 1 March 2013 (2013-03-01), pages 1-9, XP055696937,

## Description

### Technical Field

The embodiments described hereinbelow relate to the field of implantation of dental implants, and in particular to apparatus and methods for guidance and implantation of extra maxillary and intra maxillary sinus zygomatic implants.

### Description of Related Art

Zygomatic implants are well known for years as dental implants for the upper jaw, or maxilla.

Noris Medical presents products and tools for use with dental implantations in general and with Zygomatic implantations in particular, on pages 22-25 of a catalogue published on the Internet at http://www.norismedical.com/products/catalog-2/.

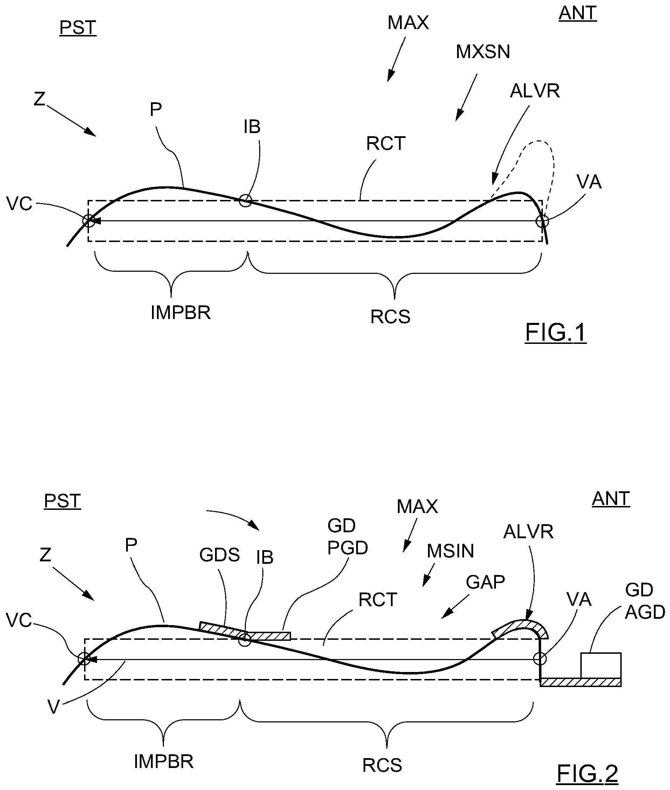

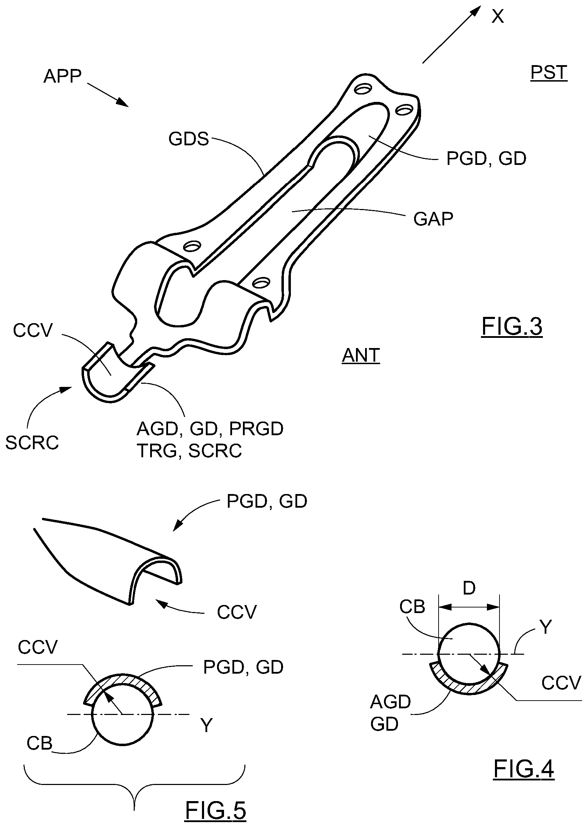

Carlos Aparicio et al. published a paper entitled "Zygomatic implants: indications, techniques and outcomes, and the Zygomatic Success Code" in Periodontology 2000, Vol. 64, 2013, 1-18, available on the Internet at www.apariciozygomatic.com/wp~ content/uploads/2015/05/ Zygomatic-Success-Code_2.pdf, wherein an extra maxillary implantation of a zygomatic implant in a skull is shown on page 3 as Fig. 2. An intra sinus implantation of a zygomatic implant is shown on page 6 as Fig. 5.

J.Chow published a related paper entitled "A novel device for template-guided surgery of the zygomatic implants" in the Int. Journal of Oral Maxillofacial Surgery 2016, Vol. 45, pg. 1253-1255.

Document US2010256649 discloses a device and a method for producing a drill assistance device for at least one implant hole in a bone structure. According to the method, a three-dimensional solid reproduction of the anatomical zone of implantation is made and, from this reproduction, a drill assistance device comprising a rigid base is provided with at least one drill guide. The three-dimensional solid reproduction consists of a reproduction of an internal and peripheral portion of said bone structure, exempt, at least in the vicinity of each implant hole, from the surrounding non-osseous tissues and mucosa, wherein said rigid base having at least one surface adapted to be able to bear in contact with an external surface portion of the three-dimensional solid reproduction.

### Summary of Invention

The embodiments disclosed herewith relate to apparatus and methods for zygomatic implantations. Zygomatic implantations refer to dental implants which are implanted in the maxilla, i.e. the upper jaw. There is described an apparatus for implantation(s) of zygomatic implant(s) and for guiding preparations for implantation of implants. The implants are implanted in coincidence with a previously derived implantation vector. The apparatus includes a guide shell which is disposed on a portion of the maxilla and is configured to support guides. The guides include an anterior guide operative in association with a posterior guide, and the guides form a pair of guides. The pair of guides are distanced apart and are inverted relative to each other. Inverted means that when a guide such as an anterior guide is supported on a cylindrical body, then the posterior guide is disposed diametrically opposite and/or: a zygomatic implant, an implantation drill, a preliminary drill, at least one-dedicated dental tool.
For one out of the pair of guides, inverted means that when a guide such as an anterior guide is supported on a cylindrical body, then the posterior guide is disposed diametrically opposite thereto.

The apparatus may further include a slit guide SLTGD to guide one or more dedicated dental tools DDNTL in alignment with the vector V. In addition, the apparatus may operate for an extra maxillary implantation(s) and for intra sinus implantation(s).

There is also provided a method for implementing an apparatus for preparing implantation and for safely implanting zygomatic implant(s) in coincidence with an a priori derived vector V of implantation. Safely means preventing physical damage to a patient such as for example hurting an eye.

Each guide may be configured as a trough guide. The guides are also configured to guide an implantation drill to drill a bore for implantation of the zygomatic implant in coincidence with the vector. The trough of the anterior guide is inverted relative to the trough of the posterior guide. The trough of the posterior guide has an anterior portion which protrudes out of and away from the surface of the guide shell GDS. Dental tools DNT are operated in association with the pair of guides GD.

There is provided an apparatus wherein a moment of forces applied on a portion of the implantation drill IMPDR which is seated between the pair of guides PRGD urges the implantation drill IMPDR in alignment with the vector V.

There is further provided an apparatus wherein each one out of the anterior guide AGD and the posterior guide PGD is configured to receive a portion of a cylindrical body CB having a guide-matching exterior diameter D in firm seated support therein in alignment with the implantation vector V, and each one out of the zygomatic implant ZI and of the at least one dental tool DNT having a portion of a guide-matching exterior diameter D is firmly seated in the pair of guides PRGD.

There is also provided an apparatus wherein each one out of the anterior guide AGD and the posterior guide PGD is configured to receive a portion of a cylindrical body CB of matching exterior diameter D in firm seated support therein on at least two points of contact CP, wherein relative to portions of the matching cylindrical body CB, the at least two points of contact CP disposed on the anterior guide AGD are closer to the maxilla MAX than the at least two points of contact CP disposed on the posterior guide PGD, and portion(s) of a matching cylindrical body CB of a zygomatic implant ZI and of at least one out of the dental tools DNT are configured to be firmly seated in the pair of guides PRGD.

### Technical Problem

The problem is that of a dentist having to correctly guide and operate a free hand-held drill rotating osteomatic device, such as a drill rotated by a handpiece, to drill in precise direction into a bone of the skull which bone may be hidden from view, along a predetermined oriented direction. It has to be considered that straying from the desired predetermined oriented direction may damage organs hit by the drill, which damage is sometimes irrepairable.

In the description, a drill is defined as a dental bore-cutting tool, such as for drilling into a bone or a tooth, and the machine rotating the drill is defined as a handpiece, which is not shown in the drawings.

It would therefore be beneficial to provide a simple dental apparatus that will ensure stable guidance in well orientated direction along a preplanned selected vector of implantation.

### Solution to Problem

The solution is provided by an apparatus including dental tools and dental implantation guides for releasable affixation to the maxillary bone, to guide preparations of implantation, the drilling of the implantation bore, and the anchoring of the zygomatic implant without deviation from the implantation vector selected by a dentist.

A vector, or implantation vector, is defined as an entity having a point of origin, an end point, a length, and a direction of orientation in space.

An implanted zygomatic implant is considered to coincide with the vector, or vector of implantation. Tools for use with the dental implantation guide may be aligned, which means coaxially aligned with the vector, thus coaxially aligned with the axis of symmetry of a zygomatic implant.

### Advantageous Effects of Invention

One advantageous effect is that the dental implantation guide ensures that the implant will be inserted in coincidence with the selected implantation vector, without straying away therefrom, and will therefore be safe and void of medical complications caused to by the implantation to other organs in the skull.

Another advantage is the ease and simplicity of the dental procedure. Still another advantage is the brevity of the dental intervention.

### Brief Description of Drawings

Non-limiting embodiments of the invention will be described with reference to the following description of exemplary embodiments, in conjunction with the figures. The figures are generally not shown to scale and any measurements are only meant to be exemplary and not necessarily limiting. In the figures, identical structures, elements, or parts that appear in more than one figure are preferably labeled with a same or similar number in all the figures in which they appear, in which:
Fig. 1 shows a profile line of a cross-section of the maxilla,
Fig. 2 depicts a cross-section of an embodiment,
Fig. 3 isometrically illustrates an exemplary guide shell,
Figs. 4 to 6 depict embodiments of guides,
Fig. 7 illustrates inverted guides supporting a cylindrical body,
Figs. 8 to 11 show more embodiments of guides,
Fig. 12 to 20 refer to the use of an embodiment,
Fig. 21 isometrically illustrates a guide shell for two implantations,
Fig. 22 illustrates the support of a cylindrical body,
Fig. 23 isometrically illustrates another exemplary guide shell
Fig. 24 is a cross-section of an embodiment,
Figs. 25 to 28 depict further embodiments of guides,
Figs. 29 to 38 illustrate the use of an embodiment,
Fig. 39 isometrically illustrates another guide shell for two implantations,
Figs. 40 to 45 refer to intra sinus implantation,
Fig. 46 illustrates two stages of implantation, and
Fig. 47 isometrically illustrates a guide shell for two intra sinus implantations.

### Description of Embodiments

Fig. 1 is an illustration used for the sake of orientation and ease of description.

Fig. 1 schematically depicts the shape of a profile line P of a cross-section taken through the naked maxilla bone MAX, thus from which tissue has been folded-over or removed. The profile line P is disposed in a plane cut through the axis of an implantation bore IMPBR opened for implanting therein of an extra maxillary zygomatic implant ZI coinciding with a planned implantation vector V selected by a dentist. The implantation vector V, or vector V of implantation, may pass from the anterior ANT alveolar ridge ALVR, via the maxillary sinus MXSN to the posterior PST zygomatic bone Z. Such a profile line P for a particular person may be obtained by use of CAD/CAM computer programs operated on images derived by three-dimensional imaging facilities. The dashed-line rectangle RCT superimposed on the profile line P represents a cross-section cut in the plane of the profile P, of a cylinder enveloping a rather cylindrical zygomatic implant ZI. Actually, the anchoring portion of a zygomatic implant ZI may be conic, thus not perfectly cylindrical, therefore, the rectangle RCT is an approximation.

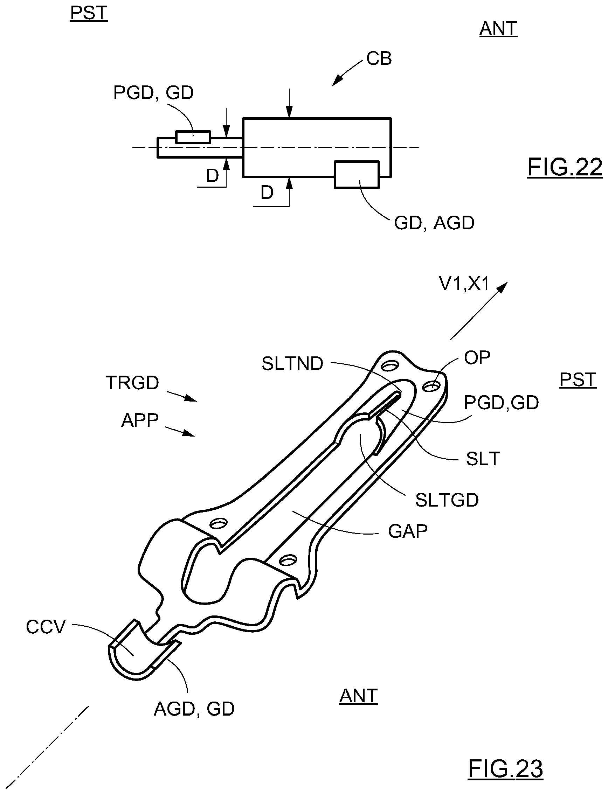

The rectangle RCT is a cross-section of a general cylindrical body CB having an exterior diameter D, possibly like that of the cylindrical portion of a zygomatic implant ZI or of a dental tool. For a generally cylindrical body CB having more than one cylindrical portion, the same denomination D for the exterior diameter refers to the exterior diameter of each one out of the specific cylindrical portions, as shown in Fig. 22. For example, with a zygomatic implant ZI having two cylindrical portions, even though each one portion may have a different exterior diameter, each portion may still be referred to as having an exterior diameter D. A portion of a cylindrical body of diameter D supported by a matching guide GD' means that the guide GD matches the diameter D of that specific portion of the cylindrical body, as shown in Fig. 22.

On the profile line P, the point VA indicates the anterior point of the implantation vector V, and the point VC marks the point of the posterior anchoring end of the vector V, which point VC is the limit that the posterior end of the zygomatic implant ZI may not trespass. The point VC may be disposed just posterior out of the zygoma bone Z but may not penetrate tissue and skin on the zygoma bone Z. With an extra maxillary zygomatic implantation, the point IB is the most posterior point of intersection of the rectangle RCT with the zygomatic bone Z. In general terms, an anterior portion of the rectangle RCT, from point VA to point IB, may mark the portion of the maxilla MAX along which a recess RCS will be prepared for the zygomatic implant ZI. The portion of the rectangle RCT from point IB to point VC includes the implantation bore IMPBR. The implantation vector V thus extends from point VA to point VC, and the zygomatic implant ZI has to coincide with the implantation vector V.

In the description, an implanted zygomatic implant ZI is considered to coincide with the vector V, or vector of implantation. Zygomatic implants ZI and tools for use with the dental implantation guide(s) may be aligned with the vector V, which means coaxially aligned with the vector V, thus also coaxially aligned with the axis of symmetry of a zygomatic implant ZI. Parallel to the vector V is thus different from alignment with the vector V, which alignment means coaxial alignment with the vector V.

Fig. 2 depicts a cross-section of a portion of a guide shell GDS pertaining to the apparatus, which guide shell GDS covers a portion of the profile line P, thus covers a portion of the maxilla MAX. The guide shell GDS extends to the anterior of the alveolar ridge ALVR, thus anterior to the point VA, and ends posterior to the point IB, which point IB indicates the posterior intersection point of the rectangle RCT with the zygomatic bone Z. A gap GAP may extend from a point somewhat anterior to the point VA up to a point somewhat posterior to the point IB. More gaps GAP may be opened in the guide shell GDS.

Fig. 3 illustrates an exemplary embodiment of a guide shell GDS, configured for one implantation, to support one pair of guides PRGD, which means two guides GD, namely an anterior guide AGD and a posterior guide PGD. The guide shell GDS may be configured to support more than one pair of guides PRGD, for each one pair of guides PRGD to be used for a different implantation. The guides GD may be shaped as a portion of a concave trough TRG, say having a semi-circular shape SCRC, or a concave V-channel VCH, or having another desired shape. Fig. 2 shows a concave posterior guide PGD, such as a trough TRG, which extends anteriorly away from the intersection point IB and gradually away from the guide shell GDS for passage therethrough. As better seen in Figs. 3, the concave portion of the posterior guide PGD is inverted relative to the concave portion of the anterior guide AGD.

Fig. 3 shows an exemplary embodiment of the anterior guide AGD which may be shaped as a portion of a concave CCV trough TRG having for example a somewhat semi-circular shape SCRC which is supported anterior to the point VA shown in Fig. 1. Fig. 4 shows a cross-section of a cylindrical body CB having an exterior diameter D which is received in matching disposition and is firmly rested in the concave portion CCV of the anterior guide AGD. Fig. 5 is a detail of an exemplary embodiment of the posterior guide PGD, and a cross-section of a cylindrical body CB having an exterior diameter D which is received in matching disposition and is firmly rested in the concave portion CCV of the posterior guide PGD. It is noted that the anterior guide AGD as well as the posterior guide PGD cover at most, but preferably less than half of the periphery of the cylindrical body CB, which is advantageous for release of the guide shell GDS from the maxilla MAX when there is provided an appropriate gap GAP, as shown in Fig. 3.

The guide shell GDS is preferably configured to conform with and for releasable affixation to the maxilla MAX. A zygomatic implant ZI which is firmly inserted into and supported by the pair of guides PRGD will thus be aligned with the vector V. Release of the guide shell GDS from the maxilla MAX is possible when desired, and also either after drilling the implantation bore(s) IMPBR, or after completion of the implantation(s).

Furthermore, the concave portion CCV of the anterior guide AGD which faces away from the maxilla MAX is inverted relative to the concave portion CCV of the posterior guide PGD which faces towards the maxilla MAX. The face of the concave portion CCV of a guide GD is accepted as being that opening of the guide via which the cylindrical body CB is introduced to become firmly seated in a guide GD out of the pair of guides PRGD.

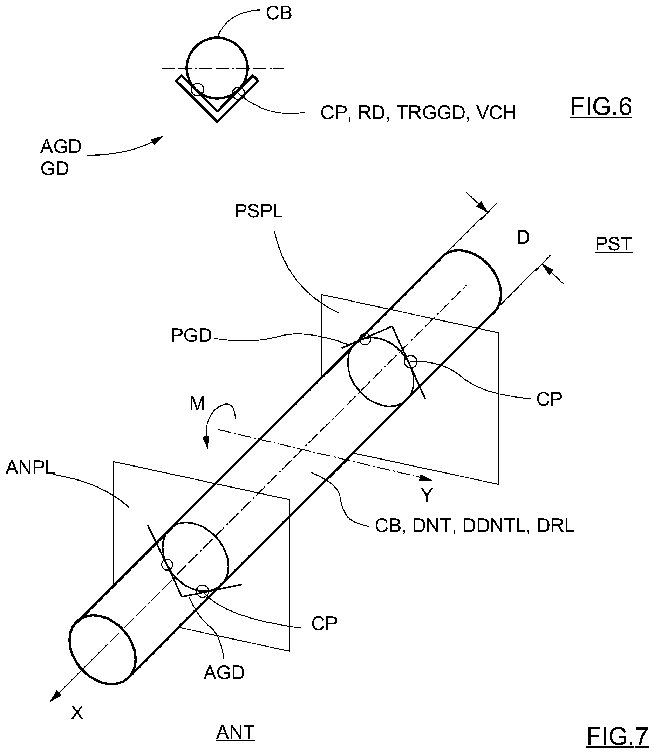

Fig. 6 illustrates a cross-section of an exemplary anterior trough-shaped guide AGD formed as a V-block, also practical as a posterior guide PRG when inverted relative to the anterior guide AGD shown in Fig. 6. Like other guides GD practical for pairs of guides PRGD, the V-block guide GD may support a cylindrical body CB on two points of contact CP, or along two parallel segments of a line parallel to the vector V, or on two surfaces of the guide GD. In Fig. 6, the cylindrical body CB is shown to be supported by an anterior guide AGD shaped as a V-block which is limited to cover at most, but preferably less than half of the periphery of the cross-section of the cylindrical body CB. A guide GD out of the pair of guides PRGD and out of the various shapes and bodies practical to operate as a guide GD, may be referred to hereinbelow as an anterior guide AGD, a posterior guide PGD, and as a trough guide TRGGD.

### Guide shell

The guide shell GDS for a zygomatic implantation is a structure which supports at least one pair of guides PRGD. The guide shell GDS is the interface which couples the pair(s) of guides PRGD to the bones of the skull of an individual person. Therefore, the guide shell GDS has to be custom made to the shape of at least a portion of the uncovered and naked portion of the maxilla MAX of the treated individual. Commonly available three dimensional, or 3D, imaging facilities allow to retrieve detailed data regarding the structure of the skull bones, which data may be used by CAD/CAM computer programs to allow a dentist to plan the implantation procedure and to allow a designer to design and produce a tailor-made guide shell GDS. It is by help of the 3D imaging facilities and of CAD/CAM computer programs that a dentist may select the vector V of implantation of one or more zygomatic implants ZI.

A vector V of implantation defines a direction of orientation in the 3D volume of the skull, an anterior point of origin VA, and a posterior end point VC, thus also a length. Additional retrieved data may be accompanied with geometrical spatial relationships between the bones of the skull and the zygomatic implant ZI. A different vector V has to be selected for each implant.

A guide shell GDS may be made out of at least one rigid material, has to support at least one pair of guides PRGD, and has to conform to a portion of the surface of the uncovered maxillary bone MAX. Furthermore, means for releasable affixation of the guide shell GDS to the maxilla MAX may include screws, and/or pins, and/or adhesives.

In the description hereinbelow, a cylindrical body CB of diameter D is used to represent at least a portion of a zygomatic implant ZI, or of a common dental tool DNT used for implantation having the same diameter D, or of a dedicated dental tool DDNTL specific for assistance with an implantation procedure by use with the apparatus APP. For example, tools may include drills, burrs, and guides. Hence, a guide GD configured to receive a cylindrical body CB of diameter D therein is considered a being configured to receive a zygomatic implant ZI or a dental tool in matching support therein.

A dedicated dental tool DDNTL is a dental tool DNT which is dedicated for use with the apparatus APP described herewith. Dedicated dental tools DDNTL are included in and pertain to the apparatus APP, contrary to commonly available dental tools DNT.

Fig. 7 schematically illustrates a cylindrical body CB of diameter D cut by an anterior plane ANPL and by a posterior plane PSPL which are distanced apart from each other. Each one of the anterior plane ANPL and the posterior plane PSPL shows respectively, two points of contact CP on an anterior guide AGD and on a posterior guide PGD, as a support for the cylindrical body CB. The anterior guide AGD and the posterior guide PGD are shown to be inverted relatively to each other. Irrelevantly of the shape of the pair of guides PRGD, two points of contact CP appropriately disposed diametrically opposite to each other on the periphery of a cross-section of the cylindrical body CB on the anterior plane ANPL and on the posterior plane PSPL, are sufficient to stably support the cylindrical body CB on the guides GD. This means that a moment of forces M applied about an axis Y perpendicular to the longitudinal axis X of the cylindrical body CB, say for that body CB to be urged into the anterior guide AGD, that cylindrical body CB will be urged into stable and firm support by the pair of guides PRGD. Thereby, the cylindrical body CB is correctly aligned with the vector V and is limited to freedom of motion in rotation and in translation.

For example, a handpiece, not shown, may be used to introduce an implantation drill IMPDR in seated support on the pair of guides PRGD, and to apply a moment of forces M on that drill to be firmly urged into the anterior guide AGD. Thereby, the implantation drill IMPDR will be forced into the posterior guide PGD. Even when the posterior guide PGD is hidden from of view, the resultant moment M of forces from the pair of guides PRGD will indicate that the implantation drill IMPDR is coaxially aligned with the vector V. Hence, the apparatus APP may be used even when the posterior guide PGD is hidden from view, such as may occur for example with intra sinus implantations.

The benefits resulting from the application of a moment of forces M is a basic feature which is valid for the various exemplary embodiments described herewith.

Fig. 3 illustrates that a guide shell GDS may be made as one piece of one type of rigid material, such as metal, which may be selected as Titanium for example, and may be produced say by a three-dimensional lithographic printing machine. To save on costs, a rigid guide shell GDS may be produced out of material which is less expensive and is advantageous for 3D lithography printing. Plastic material may also be considered. It is possible to regard each contact point marked CP in Fig. 6 as showing a cross-section of a wire RD or of a rod RD harder than or less erodible than plastic. Such a rod RD may be supported by a guide GD and be oriented along a longitudinal line segment parallel to the vector V. The interface between a rotating cylindrical body CB such as a drill DRL and a guide GD, may be selected for example, as at least two separated apart parallel rods RD of material less erodible than plastic, which may be embedded in or retained by plastic material or other material(s), and may become a guide GD. Fig. 6 may thus be considered to represent a cross-section of such a guide GD where the cylindrical body CB is supported on metal, here the rods RD, so as not to abrade the plastic material out of which the guide GD or the shell GDS may be made, and maintain precise orientation in alignment with the vector V.

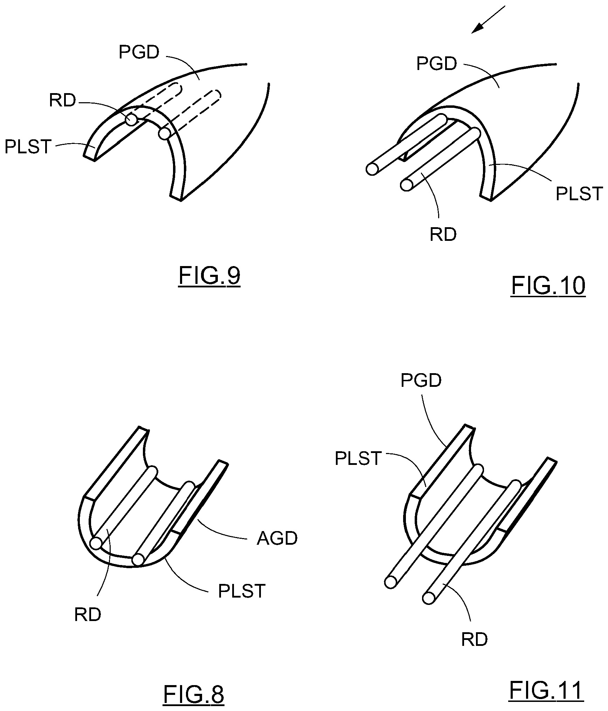

Figs. 8 and 9 depict exemplary embodiments of, respectively, an anterior guide AGD and of a posterior guide PGD pertaining to a guide shell GDS made of plastic material PLST, wherein two parallel rods RD have been embedded parallel to the vector V. Hence, a guide shell GDS may be made out of one or more materials, of the same type of material or not, and be reinforced by the same or with other types of material. Figs. 10 and 11 show an exemplary embodiment of, respectively, a posterior guide PGD and an anterior guide AGD, each one supporting two parallel cantilevered rods RD which extend anteriorly away from those guides GD, and may be embedded in plastic material PLST for example.

It is noted that such rods RD are applicable to various guides GD of different shape, as inserts or as guides GD that may or not extend anteriorly away from the guide GD to which they are coupled. For example, the contact points CP shown in Fig. 6 may be implemented as rods RD which may or not extend thereout.

The exemplary embodiments described hereinbelow are used for zygomatic implantation(s) ZI in the zygoma bone Z. As described by Wikipedia on the Internet at "Zygoma Implant", zygoma implants ZI are used for dental rehabilitation when there is insufficient bone in the maxilla, or upper jaw.

The preparations for the implantation of a zygomatic implant ZI requires osteotomy of the bones of the skull to be performed. Osteotomy is defined as the treatment or processing of bones, including cutting, drilling, burring, and the like, and is performed by use of osteotomic tools. Osteotomy is thus accepted as referring to the removal of a portion of a bone, which may proceed through a series of successive steps. It is noted that with the exemplary embodiments described hereinbelow, the osteotomic steps are guided by and in association with the various guides GD, including the guides supported by the guide shell GDS, the guides provided as dedicated dental tools DDNTL, and possibly further guides. With a step of operation requiring alignment with the vector V, the use of one guide GD from the beginning to the end of that step is not considered to be sufficient to ensure correct alignment. Dedicated dental tools DDNTL are tools which pertain to and are included in the apparatus APP, and are operative therewith together with the guide shell GDS.

### Planning, preparations, and implantation

Planning prior to implantation requires to select and define the vector of implantation V, whereafter the guide shell GDS may be designed and fabricated. By help of the three-dimensional imaging facilities and of computer processing facilities running computer programs, such as CAD/CAM computer programs for example, a dentist may derive data to select and define a vector V of implantation of one or more zygomatic implants ZI. In turn, based on the derived data, a technician may design and produce an individual tailor-made guide shell GDS in conformance with the topography of the maxilla MAX of a patient by use of a three-dimensional lithographic additive printer for example. Evidently, the topography of the maxilla MAX which is different for each individual, has to be retrieved *a priori.*

Preparations prior to use assume that a vector V has been defined and that tissue covering the maxillary bone MAX has been folded-over, or removed, to expose a naked bone portion of the maxilla MAX.

Use, in broad terms, may include the following steps as applied to the use of the exemplary embodiments of the apparatus APP.

As a first step, use of the apparatus APP requires that the guide shell GDS be properly disposed and releasably affixed to and in conformance with the topography of the maxilla MAX, such that the pair of guides PRGD are correctly oriented relative to the vector V. In Fig. 2, the implantation vector V is represented by the segment of line stretching from the points VA to VC, and the pair of guides PRGD is oriented accordingly.

The steps necessary for use with an exemplary embodiment of the apparatus APP are described hereinbelow. An embodiment may include a guide shell GDS, common dental tools, as well as dedicated dental tools DDNTL specifically designed for operation with a selected embodiment of the apparatus APP. For the sake of ease of illustration, the pair of guides PRGD may be selected to have many possible configurations, and are depicted and referred to as semicircular troughs TRG. A pair of guides PRG may include guides of different configuration, such as depicted in Figs. 4 to 6, and 8 to 11, and others. For example, a pair of guides PRG may include a semicircular trough TRG disposed inverted to a V-block shape.

In a first osteotomy step, a first volume of bone is removed from the maxilla MAX, to provide an initial first cavity FRTCV from which the next osteotomy steps will proceed.

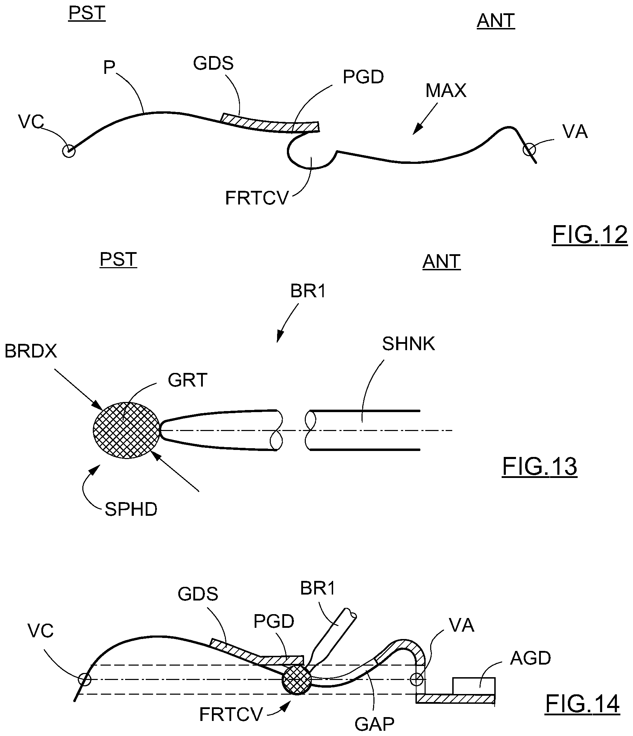

Fig. 12 illustrates the result of the first osteotomy step performed to create the first cavity FRTCV under guidance of the posterior guide PGD, by use of a first tool having a spherical headed burr BR1 shown in Fig. 13. The anterior guide AGD is not shown in Fig. 12.

In Fig. 13, the osteotomic burr BR1, is shown to have an abrasive spherical head SPHD which is coupled to a cylindrical shank SHNK that terminates the burr tool BR1. The spherical abrasive head SPHD may have an appropriately selected exterior diameter BRXD, such as the exterior diameter D of the zygomatic implant ZI which may be equal to 4.2 mm.

Fig. 14 depicts the use of the first burr BR1 to form the first cavity FRTCV. The shank SHNK may be engaged slant relative to the posterior guide PGD. To open the first cavity FRTCV shown in Fig. 12, the burr BR1 is rotated, say by a handpiece, not shown, and is introduced into the posterior guide PGD to cut into the bone of the maxilla MAX. The dental burr tool BR1 may be handled and pivoted to obtain a desired first cavity FRTCV.

It is noted that to avoid abrasion of the posterior guide PGD, a portion of the spherical head SPHD adjacent the shank SHNK, may be kept smooth while the remaining portion of the head SPHD may be covered for example with abrasive diamond, tungsten carbide, or titanium grit GRT, as shown in Fig. 13. Once the burr BR1 has opened the first cavity FRTCV to the depth of the diameter BRXD of the spherical head SPHD, that cavity is completed, and the first burr BR1 may be retrieved anteriorly out of the posterior guide PGD, and out of the first cavity FRTCV.

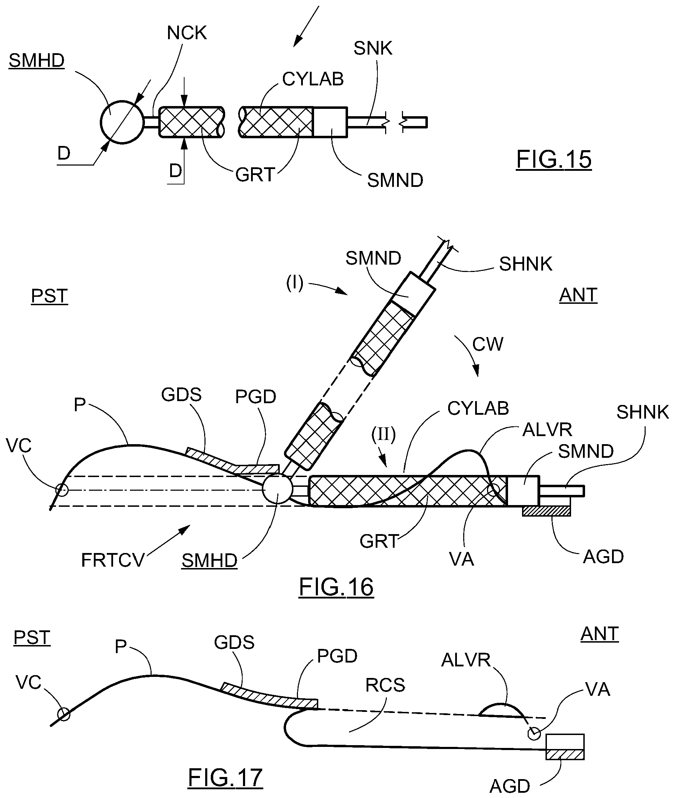

The second osteotomic step may take advantage of the first cavity FRTCV created by the first osteotomic step to open an anterior recess RCS extending from the first cavity FRTCV up to the point VA, i.e. the alveolar ridge ALVR. A second dedicated dental tool DDNTL, here a dedicated burr tool DBR2 having a smooth spherical head SMHD supported by a generally cylindrical abrasive body CYLAB, and a shank SHNK, as shown in Fig. 15, may be used to open the recess RCS.

Fig. 15 shows the dedicated dental burr tool DBR2, having a spherical smooth head SMHD coupled via a neck NCK to a cylindrical abrasive body CYLAB of diameter D of 4.2mm for example. The abrasive body CYLAB may be covered for example with abrasive diamond, or tungsten carbide, or titanium grit GRT, or be implemented as a rotary chipping tool made from steel. A shank SHNK terminates the dedicated burr DBR2. With the spherical smooth head SMHSD seated as a fulcrum in the first cavity FRTCV, the abrasive body CYLAB is allowed pivotal motion in the plane defined by the posterior guide PGD and the anterior guide AGD.

Fig. 16 illustrates the use of the cylindrical abrasive body portion CYLAB of the dedicated burr DBR2 for opening a recess RCS which extends from the first cavity FRTCV to the point VA. The dedicated burr DBR2 is shown in two dispositions in Fig. 16, i.e. a first slant initial disposition (I), and after pivoting, a second end disposition (II) when seated in the anterior guide AGD. For the initial disposition (I), the dedicated burr DBR2 is inserted into the first cavity FRTCV with the smooth spherical head SMHD as a fulcrum, and is coupled to and operated into rotation by a hand piece, which is not shown. The dedicated burr DBR2 is then pivoted in the clockwise direction CW, shown in Fig. 16 by the arrow marked CW, towards the second disposition (II), until the cylindrical abrasive portion CYLAB is seated in the anterior guide AGD, whereby the osteotomy of the recess RCS opening procedure is ended. If desired, the dedicated burr DBR2 may have a cylindrical smooth end portion SMND to prevent abrasion of the anterior guide AGD when seated therein. The dedicated burr DBR2 may be retrieved out of the recess RCS which is exposed, as schematically shown in Fig. 17. The second step of osteotomy has thus been started under the guidance of the posterior guide PGD for making a first cavity FRTCV and is ended when the dedicated burr DBR2 is firmly seated in the anterior guide AGD.

To terminate the osteotomy of the implantation procedure, a third osteotomy step, namely the drilling of the implantation bore IMPBR in the zygomatic bone ZI has to be performed. Preferably prior thereto, another common dental tool DNT, namely a drill guide DRLGD is used. The drill guide DRLGD ensures stable axially centered support and coaxial alignment of a preliminary drill PRDRL with the implantation vector V, for example prior to use of the implantation bore drill IMPDR. A preliminary drill PRDRL is used to drill an orientation bore of lesser diameter than a next bore, i.e. such as an implantation bore IMPBR, to be drilled in the preliminary bore PRLBR. Thus, to ensure perfect alignment of the implantation bore IMPBR, a drill guide DRLGD is provided.

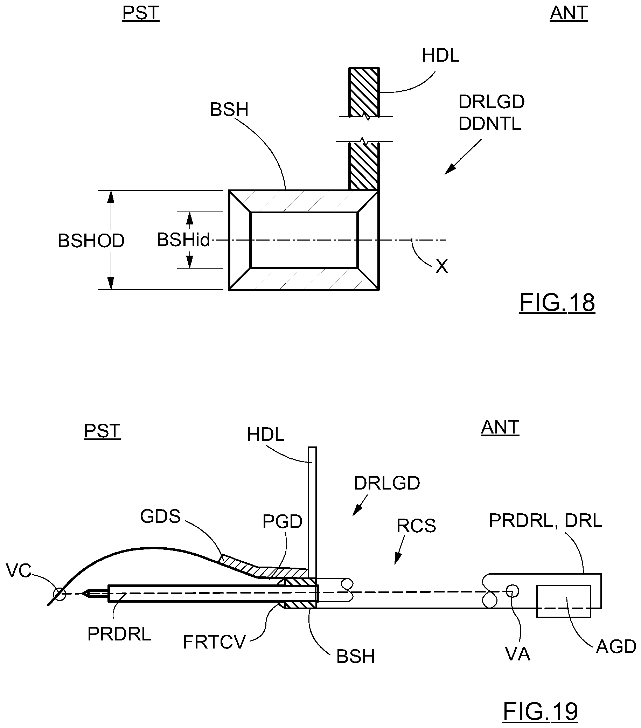

Fig. 18 illustrates the drill guide DRLGD as a bushing BSH of exterior diameter BSHOD of 4.2mm for example, and having an interior diameter BSHid of 3.5mm for example, adapted to be used with a preliminary drill PRDRL. A handle HDL may be coupled to the bushing BSH, perpendicular to the axis X thereof. The handle HDL allows to insert and hold the bushing BSH in the first cavity FRTCV in the posterior guide PGD in alignment with the vector V.

Fig. 19 depicts a drill guide DRLGD for support and orientation of a preliminary drill PRDRL. The preliminary drill PRDRL is axially centered in and by the interior diameter BSHid of the drill guide DRLGD which is axially oriented by the posterior guide PGD, and is firmly inserted in the anterior guide AGD. This means that the drill guide DRLGD is oriented in alignment with the vector V. The preliminary drill PRDRL is now mounted for rotation in a handpiece, which is not shown, and is then rotated. A preliminary bore PRLBR is drilled starting from the first cavity FRTCV until the preliminary drill PRDRL is arrested by the bushing BSH, as shown in Fig. 19. Thereafter, the preliminary drill PRDRL is retrieved, as well as the drill guide DRLGD.

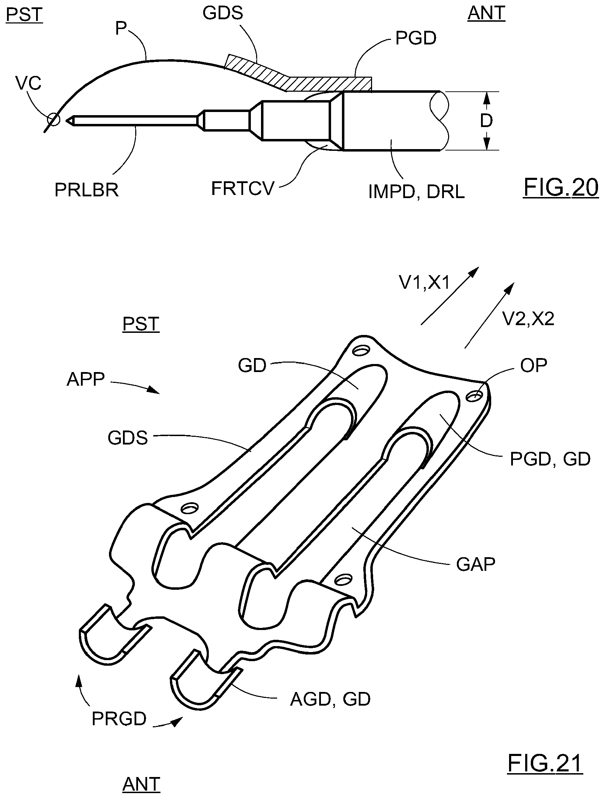

In a further step, the implantation drill IMPDR is mounted for rotation in a handpiece, which is not shown. In turn, the implantation drill IMPDR is disposed in support in the pair of guides PRGD, and the forces of a moment M are applied on the mutually inverted anterior guide AGD and posterior guide PGD, whereby the drill will be coaxially aligned with the vector V. A detail illustrated in Fig. 20 shows the diameter D, of say 4.2mm for example, being urged into the posterior guide PGD. The implantation bore IMPBR is introduced in the preliminary bore PRLBR and is then rotated to drill to the desired depth, possibly by help of depth marks stamped on the shank of the implantation drill IMPDR. Finally, the implantation drill IMPDR is retrieved out of the guide shell GDS, whereafter the zygomatic implant ZI may be inserted in guidance by the pair of guides PRGD for coincidence with the vector V, and anchored.

After implantation, the gap(s) GAP opened in the guide shell GDS permit release thereof from the maxilla MAX.

Fig. 21 is a schematic illustration of a guide shell GDS supporting two pairs of guides PRGD which are not parallel to each other but could be disposed in parallel. One pair of guides PRGD is aligned along the vector V1 and the other pair of guides is aligned along the vector V2. A guide shell GDS may thus support more than one pair of guides PRGD.

Fig. 23 illustrates another exemplary embodiment of the apparatus APP, this time with a guide shell GDS which supports three guides TRGD for guiding one implantation. The three guides TRGD include both the anterior guide AGD and the posterior guide PGD described hereinabove, with the addition of a third guide as a slit-guide SLTGD. The slit guide SLTGD is supported on the posterior guide PGD in which is formed a slit SLT opened parallel to the axis of a cylindrical body CB firmly inserted in the pair of guides PRGD, thus to be disposed parallel to the vector V, as shown in Fig. 23.

The description related hereinabove to the apparatus APP with reference to the Figs. 1 to 11 is still valid for the guide shell GDS which supports three guides TRGD, but for the slit guide SLTGD and the use of the apparatus APP as related thereto, and is therefore not repeated.

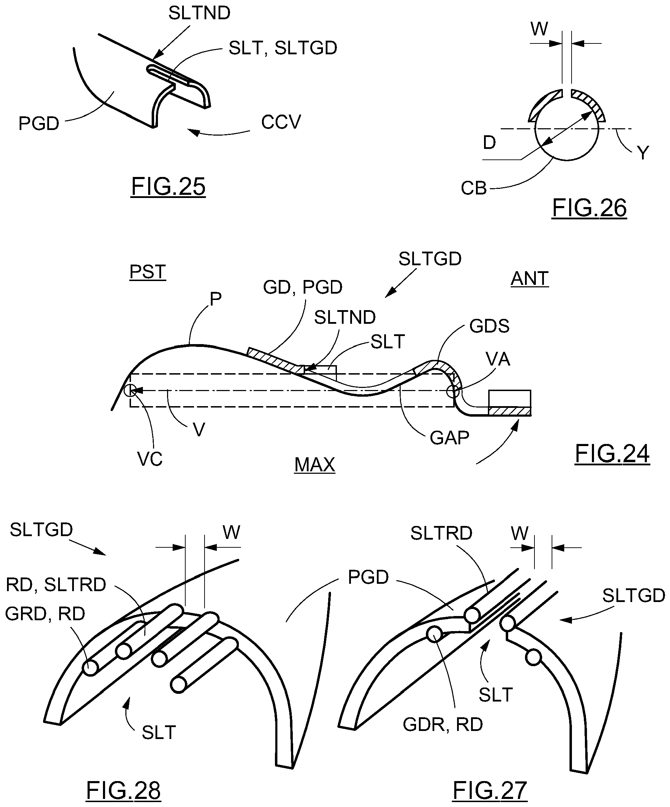

Fig. 24 is a cross-section of the guide shell GDS showing the pair of guides PRGD, i.e. the anterior guide AGD and the posterior guide PGD, as well as the slit guide SLTGD, the slit SLT, and the slit end SLTND.

Figs. 23 and 24 depict a guide shell GDS operable for one implantation, but which is configured to support a plurality of three guides TRGD. A guide shell GDS may support a plurality of sets of three guides TRGD, for each set of three guides TRGD to be used for a different implantation. For the sake of ease of illustration, the anterior guide AGD and the posterior guide PGD pertaining to the pair of guides PRGD are referred to as concave through TRG, but other configurations of the pair of guides PRGD may be selected.

Fig. 25 is an isometric representation of a posterior guide PGD showing the slit guide SLTGD, the slit SLT, and the slit end SLTND. Fig. 26 is a cross-section perpendicular through a cylindrical body CB which is inserted in the posterior guide PGD. The cylindrical body CB has an exterior diameter D which is received in matching disposition and is firmly rested in the concave portion CCV of the posterior guide PGD. As described hereinabove with reference to Figs. 4 and 5, the pair of guides PRGD may preferably cover less or at most half of the periphery of the cylindrical body CB. Covering less than half of the periphery is advantageous for release of the guide shell GDS from the maxilla MAX when an appropriately configured gap GAP is provided. For operation, the guide shell is affixed to the maxilla MAX, but is later removed therefrom. Release of the guide shell GDS from the maxilla MAX is possible when desired, and also either after drilling the implantation bore(s) IMPBR, or after completion of the implantation(s).

In addition to the various configuration of the pair of guides PRGD as trough guides TRGGD depicted in 3 to 6, and 9-11, additional configurations may be considered with a guide shell GDS having a posterior guide PGD which supports a slit guide SLTGD, as shown in Figs. 27 and 28. Figs. 27 and 28 illustrate a posterior guide PGD having a slit SLT which is implemented as two parallel slit rods SLTRD separated apart by a width W which is the width W of the slit SLT.

In Fig. 27. the posterior guide PGD has two embedded slit rods SLTRD which form the slit SLT, and a slit SLT which is implemented as two parallel separated apart by a width W which forms the slit SLT and two more parallel guide rods GRD to support a cylindrical body CB. The rods RD may be made embedded and may be made of the same or out a different material than the guide shell GDS.

Fig. 28 depicts four parallel rods RD including two parallel guide rods GRD and two parallel slit rods SLTRD forming the slit guide SLTGD. Each one of the rods RD pertaining to the guide rods GRD and to slit rods SLTRD may protrude anteriorly out and away from the posterior guide PRG. The various configuration of the slit guides SLTGD shown in Figs. 27 and 28, as well as other configurations clear to those skilled in the art, are included in a collection of guide configurations which may be named as trough guides TRGGD.

The slit guide SLTGD, the posterior guide PRG and the guide shell GDS may be implemented out of a same or out of different materials.

### Planning, preparations, and implantation with a slit guide SLTGD

Planning prior to implantation requires to select and define the vector of implantation V, whereafter the guide shell GDS may be designed and fabricated. By help of the three-dimensional imaging facilities and of computer processing facilities running computer programs, such as CAD/CAM computer programs for example, a dentist may derive data to select and define a vector V of implantation of one or more zygomatic implants ZI. In turn, based on the derived data, a technician may design and produce an individual tailor-made guide shell GDS in conformance with the topography of the maxilla MAX of a patient by use of a three-dimensional lithographic additive printer for example. Evidently, the topography of the maxilla MAX which is different for each individual, has to be retrieved a priori.

Preparations prior to use assume that a vector V has been defined and that tissue covering the maxillary bone MAX has been folded-over, or removed, to expose a naked bone portion of the maxilla MAX.

Use, in broad terms, may include the following steps involved in the use of the exemplary embodiments of the apparatus APP with a guide shell GDS supporting three guides TRGD.

Use of the apparatus APP requires as a first step, that the guide shell GDS be properly disposed and releasably affixed to and in conformance with the topography of the maxilla MAX, such that the pair of guides PRGD are correctly oriented relative to the vector V. In Fig. 24, the implantation vector V is represented by the segment of line stretching from VA to VC and the three guides TRGD are oriented accordingly.

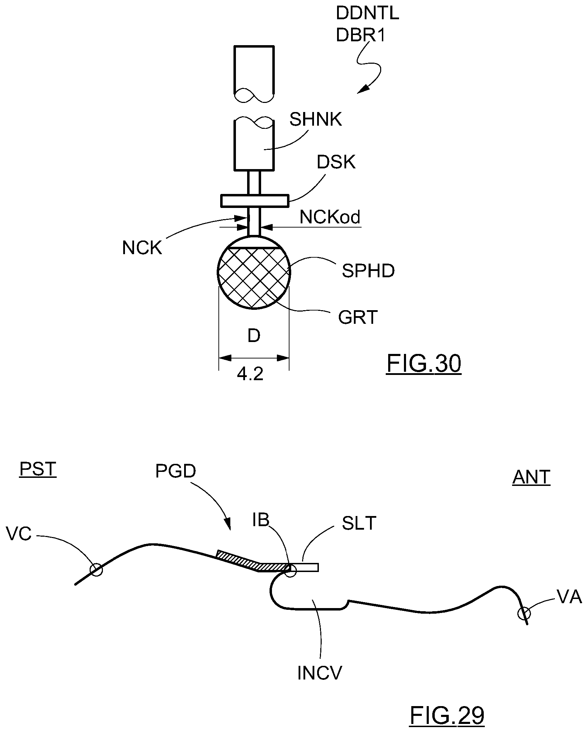

Fig. 29 illustrates the result of a first initial osteotomic step performed to create the initial cavity INCV under guidance of the slit guide SLTGD and of the posterior guide PGD, by use of a first dedicated dental burr tool DDNTL, here a dedicated spherical headed burr tool DBR1 shown in Fig. 30.

In Fig. 30, the dedicated osteotomic burr tool DBR1 is shown to have an abrasive coated spherical head SPHD which is coupled via a neck piece NCK supporting a disk DSK, to a shank SHNK which terminates the dedicated burr DBR1. The spherical abrasive coated head SPHD may have an exterior diameter D, say with D = 4.2mm same as the exterior diameter of a zygomatic implant ZI, and from which the neck piece NCK extends. The exterior diameter NCKod of the neck NCK is smaller than the width W of the slit SLT shown in Fig. 26, and is configured to engage the slit SLT in sliding fit.

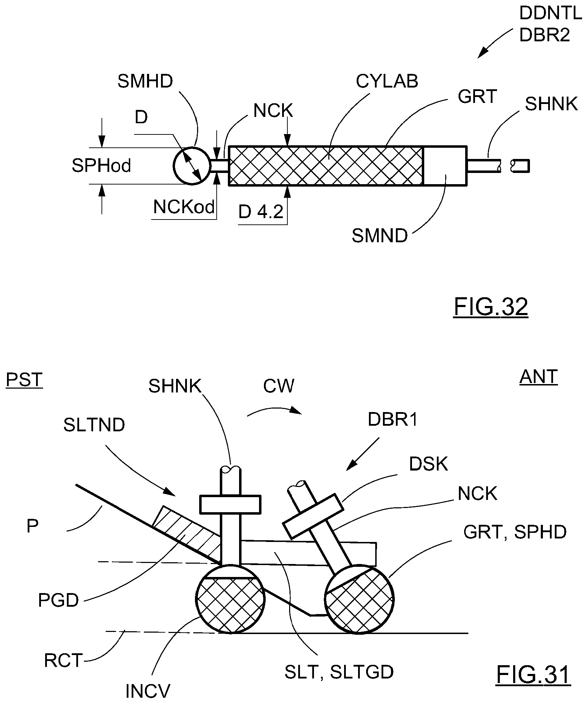

Fig. 31 depicts the posterior guide PGD, the silt guide SLTGD with the slit SLT and the slit end SLND, and the use of the first dedicated burr DBR1 to form an initial cavity INCV. In a first position (1), the shank SHNK is engaged slant relative to the slit SLT of the slit guide SLTGD, and the disk DSK is supported by the posterior guide PGD. The neck piece NCK is guided by the slit guide SLTGD, and the spherical head SPHD of the first dedicated burr DBR1 is disposed on the maxilla MAX. Next, to open the initial cavity INCV shown in Fig. 29, the dedicated burr DBR1, guided by the slit guide SLTGD and by the posterior guide PGD, is rotated, say by a handpiece, not shown, to cut a first portion of the cavity INCV into the maxilla MAX. Then, the rotating dedicated burr tool DBR1 is pivoted about the spherical head SPHD as a fulcrum, along the slit SLT of the slit guide SLTGD. During osteotomy with the spherical head SPHD, in translation and in pivotal motion of the dedicated burr DBR1, the disk DSK is guided by and guides by sliding on the posterior guide PGD. Pivotal motion of the dedicated burr DBR1 away from the slant position (1) by clockwise motion as shown by the arrow CW, may continue until the dedicated burr DBR1 reaches a straightened position shown as position (2). Further, the neck piece NCK may be pushed posteriorly along the slit SLT until the neck NCK is arrested by the slit end SLND, and the dedicated burr DBR1 may be manipulated until the initial cavity INCV is formed.

It is noted that to avoid abrasion of the slit SLD and the posterior guide PGD, the neck piece NCK and the portion of the spherical head SPHD adjacent the neck NCK, are kept smooth while the remaining portion of that head SPHD may be covered with abrasive diamond, tungsten carbide, or titanium grit GRT, as shown in Fig. 30. Once the dedicated burr DBR1 has opened the length of the cavity INCV to the depth of the diameter D, say with D = 4.2mm of the spherical head SPHD, that initial cavity INCV is completed, the first dedicated burr DBR1 may be retrieved anteriorly out of the slit guide SLTGD, out of the posterior guide PGD, and out of the cavity INCV.

The second osteotomic step may take advantage of the initial cavity INCV created by the first osteotomic step to open an anterior recess RCS extending from the initial cavity INCV up to point VA. A second dedicated dental tool DDNTL, here a dedicated burr tool DBR2 having a smooth head SMHD and a generally cylindrical abrasive body CYLAB which supports a shank SHNK, as shown in Fig. 32, may be used to open the recess RCS.

Fig. 32 shows the dedicated dental burr tool DBR2 to have a spherical smooth head SMHD coupled via a neck piece NCK, to the cylindrical abrasive body CYLAB of diameter D, wherein D may be equal to 4.2 mm, thus to the diameter of a zygomatic implant ZI. A shank SHNK is coupled to the abrasive coated body CYLAB, which may be covered with abrasive diamond, tungsten carbide, or titanium grit GRT, or be made as a bone chipping tool made out of steel for example. As shown in Fig. 32, a shank SHNK terminates the second dedicated burr DBR2. The neck piece NCK is cylindrical but has to engage the slit SLT in sliding fit and thus has an exterior diameter NCKod which is smaller than the width W of the longitudinal slit SLT shown in Fig. 26. With the spherical smooth head SMHD as a fulcrum and the neck NCK in the slit SLT, the abrasive body CYLAB of the dedicated burr tool DBR2 is allowed pivotal motion in the plane defined by the slit SLT.

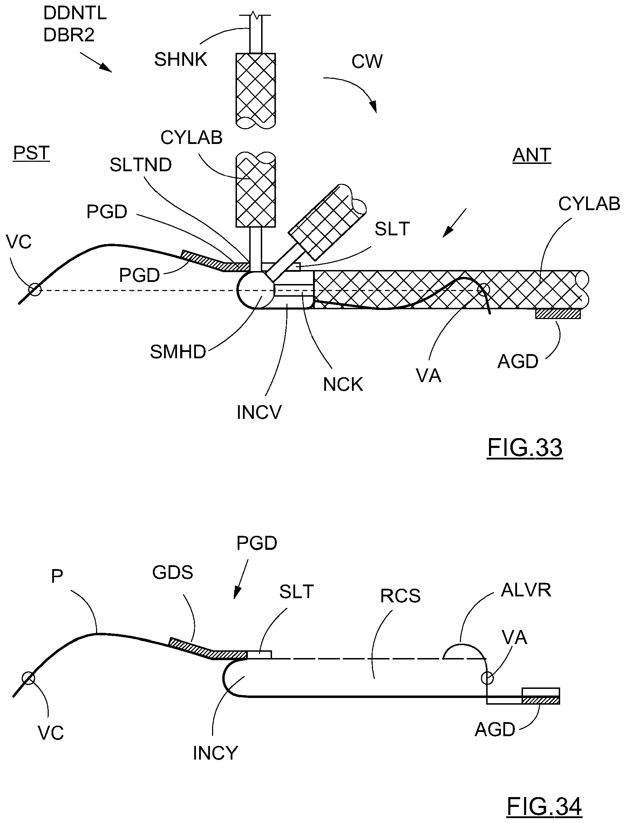

Fig. 33 illustrates the use of the dedicated burr DBR2 having a cylindrical abrasive portion CYLAB for opening a recess RCS extending anteriorly from and away of the posterior guide PGD. The dedicated burr tool DBR2 is shown in three dispositions in Fig. 33, i.e. a possible first initial disposition (3), a second pivoted disposition (4), and a third end disposition (5) when seated in the anterior guide AGD. For the initial disposition (3), the dedicated burr tool DBR2 is inserted by the neck NCK into the slit SLT of the slit guide SLTGD, thus with the smooth spherical head SMHD into the initial cavity INCV as a fulcrum, and is operated into rotation by a hand piece, which is not shown. The dedicated burr tool DBR2 is then rotated by the handpiece and is pivoted in the clockwise direction CW, shown in Fig. 33 by the arrow marked CW, towards the second disposition (4), shown partially, and is still further pivoted until the cylindrical abrasive portion CYLAB is seated in the anterior guide AGD, whereby the osteotomy of the recess RCS opening procedure is ended. If desired, the dedicated burr tool DBR2 may have a cylindrical smooth end portion SMND, as shown in Fig. 32, to prevent abrasion of the anterior guide AGD when seated therein. The dedicated burr DBR2 may be retrieved out of the recess RCS which is open and exposed as schematically shown in Fig. 34. The second osteotomy step has thus been started under the guidance of the posterior guide PGD and of the slit guide SLTGD and is ended when the dedicated burr tool DBR2 is firmly seated in the anterior guide AGD.

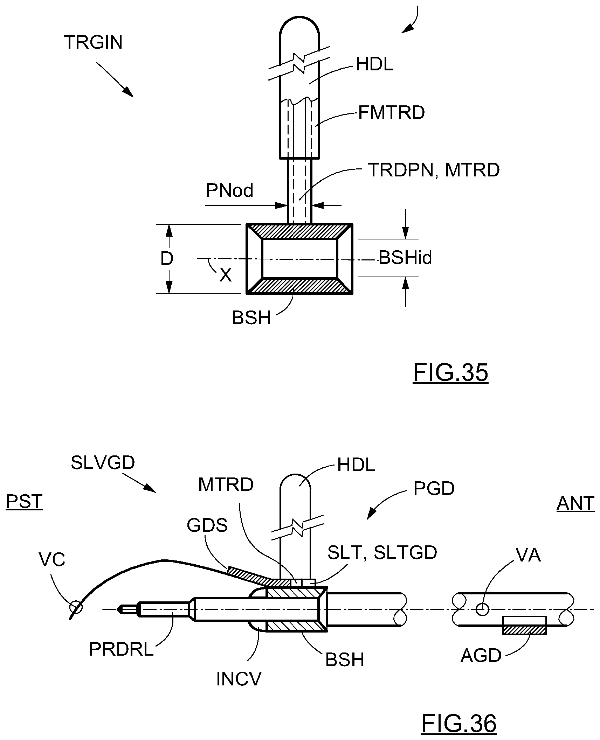

Fig. 35 illustrates an exemplary dedicated sleeve guide SLVGD with a bushing BSH having an exterior diameter D, which bushing matches at least the posterior guide PGD. The bushing BSH may have an interior diameter BSHid which is adapted for use with a dental tool, for example a dental drill tool DRL or another tool. Dedicated sleeve guides SLVGD of different interior diameter BSHid may be used with different diameter-matching dental drills DRL such as for example various preliminary drills PRDRL. A handle HDL may be coupled to the bushing BSH, perpendicular to the axis X thereof. The handle HDL allows to hold and insert the bushing BSH into the open initial cavity INCV in the posterior guide PGD which will receive the bushing BSH in retention and in alignment with the vector V. A preliminary drill PRDRL supported in the anterior guide AGD and axially centered by the dedicated sleeve guide SLVGD, will thus be coaxially aligned with the vector V.

The bushing BSH is coupled to a threaded pin TRDPN forming a threaded neck TRNCK which extends away thereout perpendicular to the X-axis of the bushing BSH. The threaded pin TRDPN has a male screw thread MTRD of exterior diameter PNod accommodated to fit in sliding fit in the slit SLT of the slit guide SLTGD. The handle HDL is hollow and supports a female screw thread FMTRD matching the male screw thread MTRD of the threaded pin TRDPN. With the handle HDL engaged less than completely on the treaded pin TRDPN, the uncovered portion of the male screw thread MTRD is configured to slidingly fit in the slit SLT of the slit guide SLTGD. The bushing BSH may thus be engaged and seated in the posterior guide PGD with the male screw thread MTRD in the slit SLT. Thereafter, the handle HDL is screw threaded onto the treaded pin TRDPN until the bushing BSH is mechanically clamped in the posterior guide PSG. Thereby, the bushing BSH is oriented in accurate axial direction in alignment with the vector V.

Fig. 36 shows the sleeve guide SLVGD with the bushing BSH fixedly clamped in the posterior PGD. The handle HDL has been rotated on the threaded pin TRDPN such that the male screw thread MTRD is barely seen in the slit SLT of the slit guide SLTGD. Only a small cross-section portion of the guide shell GDS is shown in Fig. 36.

In Fig. 36, the preliminary drill PRDRL is axially centered in and by the interior diameter BSHid of the sleeve guide SLVGD which is axially oriented by the posterior guide PGD, and is firmly inserted in the anterior guide AGD. The preliminary drill PRDRL is mounted for rotation in a handpiece which is not shown, and is then introduced in the sleeve guide SLVGD and is firmly seated into the anterior guide AGD. The preliminary drill PRDRL is now rotated by use of the handpiece. A preliminary bore PRLBR is drilled starting from the initial first cavity INCV and until the preliminary drill PRDRL is arrested by the bushing BSH, as shown in Fig. 36. Thereafter, the preliminary drill PRDRL is retrieved out of the bushing BSH, as well as the drill guide DRLGD.

Sets of dedicated drill guides DRLGD with different bushing BSH of interior diameter BSHid may be provided for use with matching dental drills DRL. If desired, the use of another dedicated sleeve guide SLVGD having a bushing interior diameter BSHid larger than a previously used one, but smaller than the exterior diameter of the implantation drill IMPBR, may be used for another preliminary drill DRL. Thereafter, the preliminary drill PRDRL and the sleeve guide SLVGD may be removed out and away of the guide shell GDS.

In a further step, the implant bore IMPBR may be drilled in guidance by the pair of guides PRGD and by the bore of a preceding preliminary drilling operation. To this end, the implantation drill IMPDR is mounted for rotation by a handpiece, which is not shown. In turn, the implantation drill IMPDR is disposed in the pair of guides PRGD, and the forces of a moment M are applied on the mutually inverted anterior guide AGD and posterior guide PGD, whereby the drill will be coaxially aligned with the vector V. As depicted hereinabove, a detail illustrated in Fig. 20 shows the diameter D of the implantation bore IMPBR of say 4.2mm for example, being urged into the posterior guide PGD. The implantation drill IMPDR is introduced in the preliminary bore PRLBR and is then rotated to drill to the desired depth, possibly by help of the depth marks stamped on the shank of the implantation drill IMPDR. The depth graduation signs may be of assistance to prevent drilling beyond the point VC shown in Fig. 24. Finally, the implantation drill IMPDR is retrieved out of the guide shell GDS, and the zygomatic implant ZI may be inserted in guidance by the pair of guides PRGD for coincidence with the vector V, and anchored.

After implantation, the gap(s) GAP opened in the guide shell GDS permit release thereof from the maxilla MAX.

It is noted that sometimes the use of the dedicated sleeve guide SLVGD may be omitted when after opening of the recess RCS, an implantation drill IMPDR supported by and forced by a moment M into the pair of guides PRGD may suffice to drill the implantation bore IMPBR.

However, it is a preferable practice to take benefit from the ability of the same dedicated sleeve guide SLVGD to operate as both, once as a fulcrum for a burr to open a recess RCS, and once as a drill guide DRLGD for drilling a bore. Thereby, the same dedicated dental tool DDNTL may be used in sequence for opening the recess RCS and for drilling a preliminary drill bore PRLBR, with all the advantages provided thereby.

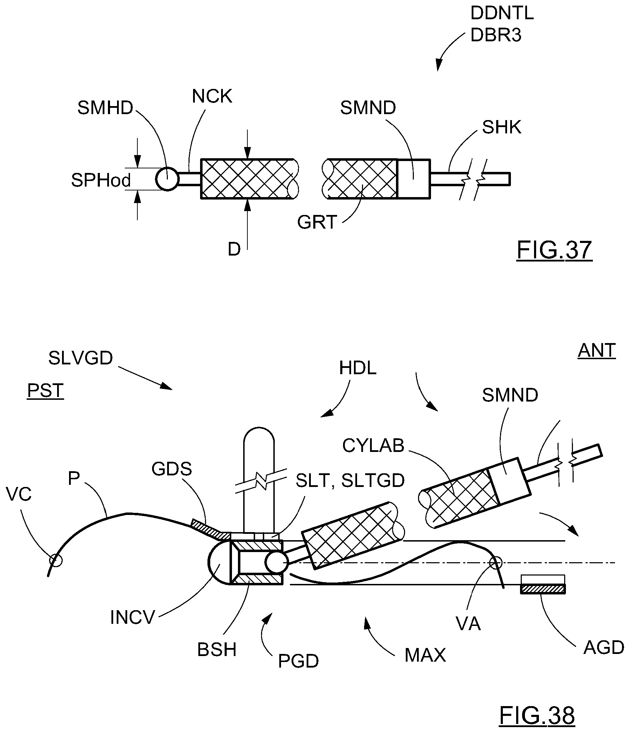

Fig. 37 depicts an exemplary dedicated third burr tool DBR3 for use with the dedicated sleeve guide SLVGD. The dedicated third burr DBR3 may have a spherical small smooth head SMHD coupled via a neck piece NCK, to a cylindrical abrasive body CYLAB of diameter D. The spherical small smooth head SMHD has an exterior diameter SPHod selected to slidingly fit the interior diameter BSHid of the dedicated sleeve guide SLVGD when inserted therein. Evidently, the exterior diameter SPHod of the spherical small smooth head SMHD is smaller than the diameter D of the cylindrical abrasive body CYLAB which may be selected as 4.2mm. A shank SHNK is coupled to the abrasive coated body CYLAB, which may be covered with abrasive diamond, tungsten carbide, or titanium grit GRT, or be made as a bone chipping tool made out of steel for example. The neck piece NCK is cylindrical and is fit to engage the slit SLT in sliding fit, and has an exterior diameter NCKod which is smaller than the width W of the longitudinal slit SLT shown in Fig. 26. Furthermore, the neck piece NCK is sufficiently long for engagement in the interior diameter BSHid of the dedicated sleeve guide SLVGD, which interior diameter BSHid has to provide support as a fulcrum to permit pivotal freedom of motion as shown in Fig. 38. The shank SHNK terminates the third dedicated burr DBR3.

Fig. 38, shows the third dedicated burr DBR3, the shank SHNK of which may be rotated by a handpiece, not shown. The spherical small smooth head SMHD is introduced in the interior diameter BSHid of the dedicated sleeve guide SLVGD which operates as a fulcrum, and the neck NCK is engaged in the slit SLT. Next, the abrasive body CYLAB of the dedicated burr tool DBR3_is rotated by the handpiece and is driven in pivotal motion in the plane defined by the slit SLT and the anterior guide AGD. The arrow marked CW indicates a pivotal direction of motion to open a recess RCS in the maxilla MAX, similar to the pivotal motion of the second dedicated burr DBR2 shown in Fig. 33.

Once the recess RCS has been opened, the third dedicated burr DBR3 is retrieved but the dedicated sleeve guide SLVGD remains in place. A preliminary drill PRDRL of interior diameter matching the interior diameter BSHid of the bushing BSH may be mounted for rotation in a handpiece, not shown. The preliminary drill PRDRL is disposed for support by the anterior guide AGD and in drill axial centering support in the interior diameter BSHid of the bushing BSH, in the same disposition as shown in Fig. 36. Thereafter, the preliminary drill PRDRL is rotated. This time the dedicated sleeve guide SLVGD, hence the interior diameter BSHid, operates as a drill guide DRLGD for axially centering the preliminary drill PRDRL in alignment with the vector V. Drilling is stopped when the preliminary drill PRDRL is arrested by abutment on the bushing BSH, as shown in Fig. 36. The preliminary drill PRDRL and the dedicated sleeve guide SLVGD may be retrieved out of the guide shell GDS after completion of the preliminary bore PRLBR.

In a further step, the implantation drill IMPDR is mounted for rotation by a handpiece, which is not shown. In turn, the implantation drill IMPDR is disposed in support in the pair of guides PRGD, and the forces of a moment M are applied on the mutually inverted anterior guide AGD and posterior guide PGD, whereby the drill will be coaxially aligned with the vector V. A detail illustrated in Fig. 20 shows the diameter D, of say 4.2mm for example, being urged into the posterior guide PGD. The implantation drill IMPDR is introduced in the preliminary bore PRLBR and is then rotated to drill to the desired depth, possibly by help of the depth marks stamped on the shank of the implantation drill IMPDR. The depth graduation signs may be of assistance to prevent drilling beyond the point VC shown in Fig. 24. Finally, the implantation drill IMPDR is retrieved out of the guide shell GDS, and the zygomatic implant ZI will be inserted in guidance by the pair of guides PRGD and of the implantation drill IMPDR, and anchored in coincidence with the vector V.

After implantation, the gap(s) GAP opened in the guide shell GDS permit release thereof from the maxilla MAX.

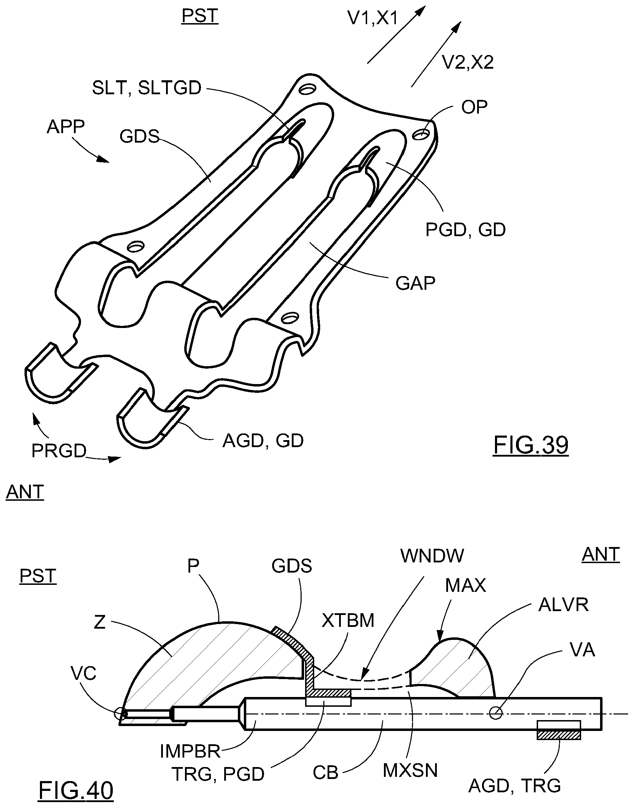

Fig. 39 is a schematic illustration of a guide shell GDS supporting two pairs of guides PRGD which are not parallel to each other but could be disposed in parallel. One pair of guides PRGD is aligned along the vector V1 and the other pair of guides is aligned along the vector V2. A guide shell GDS may thus support more than one pair of guides PRGD.

Fig. 40 schematically illustrates yet another exemplary embodiment of a portion of the guide shell GDS which supports three guides TRGD for guiding one intra sinus implantation. The three guides TRGD include an anterior guide AGD and a posterior guide PGD as one pair of guides PRGD, as well as a slit-guide SLTGD. The slit guide SLTGD is supported on the posterior guide PGD and is formed as a slit SLT therein.
When the guide shell GDS is releasably affixed onto uncovered bone, the pair of guides PRG and the slit guide SLTGD are oriented parallel to the vector V, but the posterior guide PGD is disposed in the maxillary sinus MXSN.

The description related hereinabove to the apparatus APP with reference to the Figs. 1 to 11 and 24 to 27 is still valid for the guide shell GDS which supports three guides TRGD for guiding one intra sinus implantation, and is therefore not repeated.

Fig. 40 depicts a cross-section through the maxilla MAX for an intra-sinus implantation of a zygomatic implant ZI. The profile line P shows the points VA and VC which demarcate the implantation vector V. The anterior guides AGD may be the same or similar to those described hereinabove. However, the posterior guide PGD is disposed in the maxillary sinus MXSN after penetration therein via a window WNDW which has been opened in the wall of the maxillary sinus MXSN. From the partially shown guide shell GDS, which is releasably affixed to and in conformation with the maxilla MAX, an extension member XTMB extends and penetrates into the maxillary sinus MXSN, via the maxillary window WNDW, to support the posterior guide PGD therein. Thereby, the mutually inverted pair of guides PRGD will maintain a cylindrical body CB in firm seated support therein when a moment of forces M is applied on that cylindrical body CB, as described hereinabove with reference to Fig. 7. For example, the cylindrical body CB may represent a cylindrical portion of a zygomatic implant ZI, or of a common dental tool DNT, or of a dedicated dental tool DDNTL, or of a preliminary drill PRDRL, or of an implantation drill IMPDR.

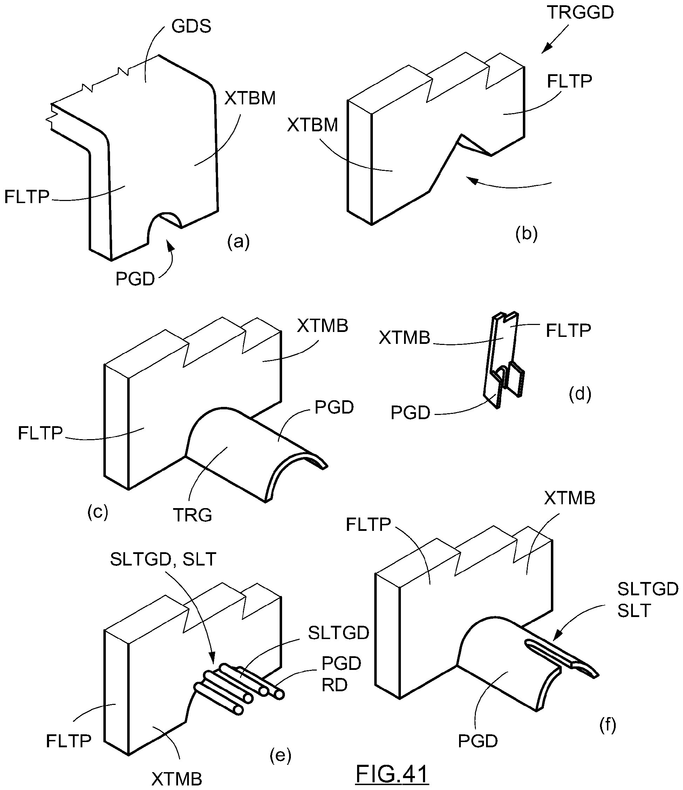

In Fig. 41, from 41 (a) to 41 (f), there are depicted exemplary posterior guides PGD, out of many other possible variations which may pertain to the collection of trough guides TRGGD that may be coupled to the extension member XTMB.

For the sake of clarity of illustration, the guide shell GDS is not shown but for a portion thereof in Fig. 41 (a), and in Figs. 41 (b) to 41 (f), only a portion of the member XTMB is shown, and that as a flat piece FLTP even though that flat piece could be rigidized say by use of rib(s) for example. The flat piece FLTP is a conceptual representation of a member which may be implemented in various shapes.

Fig. 40 also shows the outline of an implantation bore IMPBR, thus also of the outline of a portion of a cylindrical body CB which may be disposed in the implant bore IMPBR and be supported by the pair of guides PRG.

Fig. 41 (a) and 41 (b) show a posterior guide PGD configured as a cut-out of the flat piece FLTP, as respectively, a segment of a circle and a V-shape. The exemplary embodiments from Fig. 41 (a) to Fig. 41 (e) may be configured to support or guide a cylindrical body CB of diameter D, with D = 4.2 mm for example.

In Fig. 41(c) the posterior guide PGD is formed as a trough TRG cantilevered to the extension member XTMB, which trough TRG is inverted relative to the anterior guide AGD shown in Fig. 40.

Fig. 41 (d) depicts a posterior guide PGD which folds out of the flat piece FLTP to form two arms whereby a cylindrical body CB may be supported.

Fig. 41 (e) shows a posterior guide PGD with four rods RD, with two rods forming the guide rods GRD for a cylindrical body CB, and two slit rods SLTRD forming the slit SLT of the slit guide SLTGD.

Finally, Fig. 41 (f) depicts a trough TRG like shown in Fig. 41 (c) but with a slit guide SLTGD and a slit SLT.

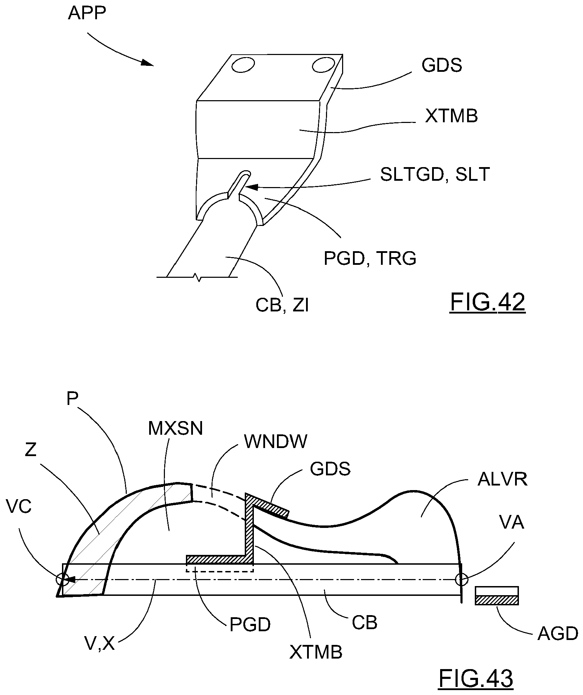

Fig. 42 illustrates a detail of a portion of the guide shell GDS which supports the extension member XTMB, the posterior guide PGD and the slit guide SLTGD with the slit SLT. For the sake of ease of illustration, the posterior guide PGD is selected as a trough TRG. With the guide shell GDS on the maxilla MAX, and the slit guide SLTGD disposed parallel to the vector V, the extension member XTMB is retained in the maxillary sinus MXSN and the posterior guide PGD is oriented in alignment with the anterior guide AGD, which is not shown in Fig. 42.

Fig. 43 is similar to Fig. 40 but for the disposition of the window WNDW and of the posterior guide PGD which are disposed posteriorly of the extension member XTMB.

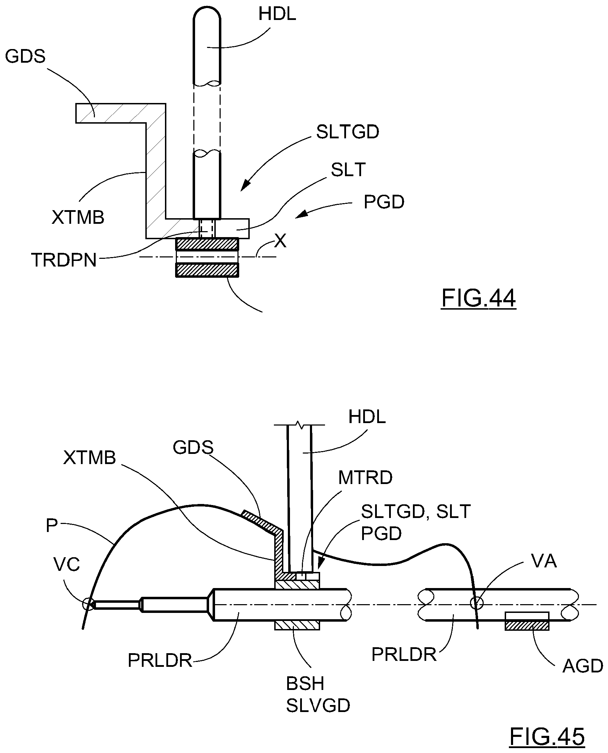

Fig. 44 illustrates a detail showing a portion of the guide shell GDS and of the posterior guide PGD wherein the dedicated sleeve guide SLVGD shown in Fig. 35 is firmly retained. The description related to the implementation, the operation and the use of the dedicated sleeve guide SLVGD as presented hereinabove is believed to be clear to those skilled in the art, and is therefore not repeated.

### Planning, preparations, and intra sinus implantation

Planning prior to implantation requires to select and define the vector of implantation V and the location and dimensions of the window WNDW, whereafter the guide shell GDS may be designed and fabricated.

By help of the three-dimensional imaging facilities and of computer processing facilities running computer programs, such as CAD/CAM computer programs for example, a dentist may select and define a vector V of implantation of one or more zygomatic implants ZI. The same imaging facilities and processing facilities may be used to define the location and size of the window WNDW which may be defined relative to the vector V as a segment of a line and to one or more points on the vector V, such as point VA and VC for example. In turn, based on the vector(s) V, a technician may design and produce an individual tailor-made guide shell GDS in conformance with the topography of the maxilla MAX of a patient by use of a three-dimensional lithographic additive printer for example. Evidently, the topography of the maxilla MAX which is different for each individual, has to be retrieved *a priori.*

Preparations prior to use assume that a vector V has been defined, that tissue covering the maxillary bone MAX has been folded-over, or removed, to expose a naked bone portion of the maxilla MAX, and a window WNDW has been opened in the maxillary sinus wall.

Use, in broad terms, may consider the following steps involved in the use of the exemplary embodiments of the apparatus APP.

As a first step, the guide shell GDS has to be properly disposed and releasably affixed to and in conformance with the topography of the maxilla MAX, such that the three guides TRGD are correctly oriented relative to the vector V. Thereby, as shown in Fig. 40, the posterior guide PGD may be introduced via the window WNDW and into the maxillary sinus MXSN.

In a second step, the dedicated sleeve guide SLVGD of Fig. 35 is inserted in the posterior guide PGD with the uncovered portion of the threaded pin TRDP engaged in the slit SLT of the slit guide SLTGD. Next, the handle HDL is screw threaded to fixedly clamp the bushing BSH into firm seated disposition in the posterior guide PGD. Thereby, the bushing BSH is oriented in accurate direction in alignment with the vector V. A cylindrical body CB passing through the bushing BSH is thus aligned with the vector V and certainly so when further supported by the anterior guide AGD.

As a third step, the dedicated sleeve guide SLVGD is used to drill a preliminary bore PRLBR.

Fig. 45 shows the sleeve guide SLVGD with the bushing BSH fixedly clamped in the posterior PGD. The handle HDL of the sleeve guide SLVGD has been rotated on the threaded pin TRDPN such that the male screw thread MTRD is barely seen in the slit SLT of the slit guide SLTGD. Only a small cross-section portion of the guide shell GDS is shown in Fig. 45.

A preliminary drill PRDRL is used to drill a preliminary bore PRLBR which is bored by use of a handpiece which is not shown. Evidently, the implant drill IMPDR has first to be mounted before being rotated. The preliminary bore PRLBR is drilled from the anterior point VA towards and via the bushing BSH which may be visible through the window WNDW, and into the zygomatic bone Z, until arrested by the bushing BSH, as shown in Fig. 45. Fig. 36 also illustrated a preliminary drill PRDRL arrested by the bushing BSH. Thereafter, the preliminary drill PRDRL and the sleeve guide SLVGD are removed. If desired, the preliminary drill PRDRL may be used to open an entry point in the alveolar crest ALVR prior to drilling of the preliminary bore PRLBR.

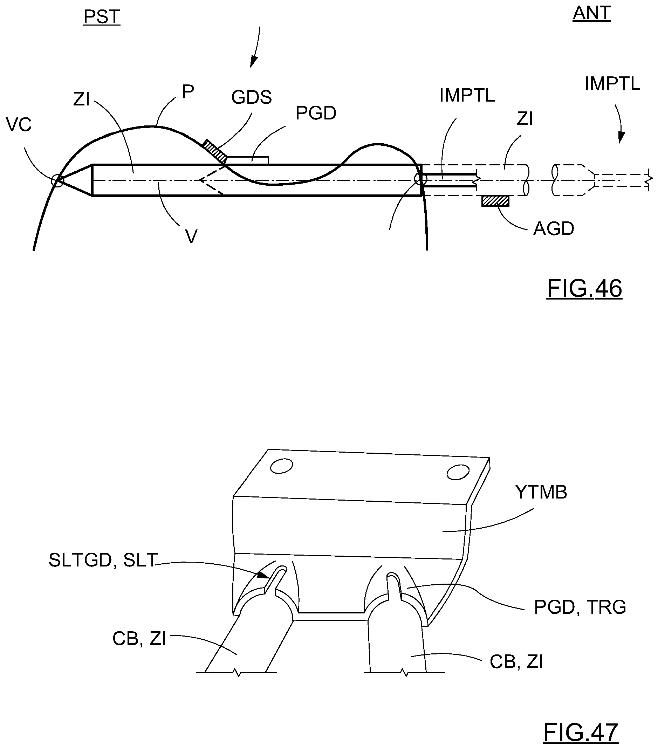

The fourth step includes insertion of the implant drill IMPDR as shown in Fig. 40. The implant drill IMPDR is disposed in support of the pair of guides PRGD and into the preliminary bore PRLBR. Now that the preliminary bore PRLBR has been drilled, the implant drill IMPDR may find support in the posterior guide PGD, in the same manner as depicted in Fig. 20. A moment of forces M is applied on the implant drill IMPDR, and the implant bore IMPBR is drilled open. Evidently, the implant drill IMPDR has first to be mounted in and rotated by a handpiece which is not shown. Next, at a first stage STG1, the zygomatic implant ZI is disposed on the pair of guides PRG as shown in Fig. 46, and is driven for insertion at the second stage STG2, into the implant bore IMPBR by help of an implant tool IMPTL. At the second stage STG2, the zygomatic implant ZI is seated in the implant bore IMPBR in coincidence with the vector V and is anchored into the zygoma bone Z by help of an implant tool IMPTL. According to design of the gap GAP, the guide shell GDS may be released from the maxilla MAX even after anchoring of the zygomatic implant ZI.

Building of the apparatus APP and of the dedicated dental tools DDNTL needs not to be described since being obvious to those skilled in the art. Use of the apparatus APP has been described in detail hereinabove and does not require to be repeated.

There have thus been described an apparatus APP for a product and for a method for implanting zygomatic implant(s) ZI in coincidence with a previously derived implantation vector V, for extra maxillary implantation(s) and for intra sinus implantation(s). The apparatus APP may include dedicated dental tools DDNTL, which tools are configured for use during preparation and implantation, such as for osteotomy, under the guidance provided by the guide shell GDS. Dedicated dental tool DDNTL may include dedicated burrs DBR for osteotomy, drill guides DRLGD for support of axially centering thereof, and sleeve guides SLVGD as guides. Commonly available dental tools may include drill DRL, such as preliminary drills PRLDR and implant drills IMPDR.

The anterior guide AGD and the posterior guide PGD may be selected as practical, on condition that a cylindrical body CB remains stably supported as described hereinabove, in particular with reference to Fig. 7. Various exemplary shapes for the pair of guides PGD are shown in Figs. 4 to 6, 9 to 11, 25 to 28, and in Fig. 41, and many other possible shapes may also be used. In general, the designations anterior guide AGD and posterior guide PGD refer to both the various described shapes as well as to other possible shapes. Anterior guide AGD and posterior guide PGD are thus generic names.

It is also possible to include the various described shapes as well as other possible shapes under the generic name of trough guides TRGGD. This allows to say that each one guide GD out of the inverted pair of guides PRGD is configured as a trough guide TRGGD which includes at least two points of contact such that two trough guides TRGGD geometrically align and support a cylindrical body CB inserted therein in alignment with the vector V on a total of at least four points of contact.

Furthermore, one may consider a dedicated dental tool DDNTL for operation as an independent guide TRGIN. For example, a sleeve guide SLVGD may possibly be supported say by the posterior guide PGD, and be used to guide another tool without help from the anterior guide AGD. In such a case, it could be said that each one guide GD configured for independent operation is an independent guide TRGIN which includes at least three points of contact to geometrically align and support a cylindrical body CB inserted therein in alignment with the vector V.

### Industrial Applicability

The apparatus for zygomatic implantation APP including the guide shell GDS and the dedicated dental tools DDNTL may be produced by manufacturers and by laboratories supplying dental equipment.

**Reference Signs List**

| # | | Name |
|---|---|---|
| | | |
| AGD | | anterior guide |
| ALVR | | alveolar ridge |
| ANPL | | anterior plane |
| ANT | | anterior |
| APP | | apparatus |
| BR/BR1 | | dental bur |
| | | |
| BRXD | | exterior diameter |
| BSH | | bushing |
| BSHid | | interior diameter |
| BSHOD | | exterior diameter |
| CB | | cylindrical body |
| CCV | | concave portion |
| CP | | points of contact |
| CW | | clockwise |
| CYLAB | | abrasive body |
| D | | diameter |
| DBR1/ DBR2/DBR3 | | dedicated burr |
| DDNTL | | dedicated dental tool |
| DNT | | dental tools |
| DRL | | dental drill |
| DRLGD | | dedicated drill guide |
| DSK | | disk |
| FLTP | | flat piece |
| FMTRD | | female screw thread |
| FRTCV | | first cavity |
| GAP | | gap |
| GD | | guide |
| GDS | | guide shell |
| GRD | | guide rod |
| GRT | | grit |
| HDL | | handle |
| IB | | intersection point |
| IMPBR | | implantation bore |
| IMPDR | | implantation drill |
| IMPTL | | implantation tool |
| INCV | | initial cavity |
| M | | moment of forces |
| MAX | | maxilla |
| MXSN | | maxillary sinus |
| MTRD | | male screw thread |
| NCK | | neck |
| NCKod | | exterior diameter of the neck |
| P | | profile line |
| PGD | | posterior guide |
| PLST | | plastic material |
| PRGD | | pair of guides |
| PRLBR | | preliminary bore |
| PRDRL | | preliminary drill |
| PRLBR | | preliminary drill bore |
| PSPL | | posterior plane |
| PST | | posterior |
| RCS | | anterior recess |
| RCT | | rectangle |
| RD | | rod |
| SCRC | | semi-circular shape |
| SHNK | | shank |
| SLT | | slit |
| SLTGD | | slit guide |
| SLTND | | slit end |
| SLTRD | | slit rod |
| SLVGD | | dedicated sleeve guide |
| SPHod | | exterior diameter |
| SMHD | | smooth spherical head |
| SPHD | | spherical head |
| STG1 | | first stage |
| STG2 | | second stage |
| TRDPN | | threaded pin |
| TRG | | trough |
| TRGGD | | trough guide |
| TRGD | | three guides |
| TRGIN | | independent guide |
| V | | vector |
| VA | | point of origin |
| VC | | end point |
| VCH | | concave V-channel |
| W | | width |
| WNDW | | window |
| X | | axis |
| XTMB | | extension member |
| Z | | zygomatic bone |
| ZI | | zygomatic implant |
| I | | first disposition |
| II | | second disposition |

## Claims

1. An apparatus (APP) for implantation of a zygomatic implant (ZI) in coincidence with an implantation vector (V), previously derived by use of imaging and computer program facilities, wherein the apparatus (APP) comprises : a dental implantation guide comprising a guide shell (GDS) and at least one dedicated dental tool (DDNTL), with guide shell (GDS) being configured to support guides (GD) and to conform with and for releasable affixation to a portion of a maxillary bone (MAX), the guides (GD) having an anterior guide (AGD) operative in association with a posterior guide (PGD) to form a pair of guides (PRGD) which are distanced apart relative to each other, and are aligned with the vector (V), and which guides (GD) are further configured as concave troughs (TRG) for support of a cylindrical body (CB), which is one out of a zygomatic implant (ZI), an implantation drill (IMPDR), a preliminary drill (DRL), and the at least one dedicated dental tool (DDNTL) which includes a dedicated burr (DBR2) comprising:
a smooth spherical head (SMSHD) configured for guidance by the posterior guide (PGD) and operative as a fulcrum,
a cylindrical abrasive body (CYLAB), coupled by a neck (NCK) to the spherical head (SMSHD), and configured for osteotomy,
a shank (SHNK) which is coupled to the body (CYLAB), whereby the dedicated burr (DBR2) is configured for operation in rotation and in pivotal motion about the fulcrum, for motion in a plane defined by the posterior guide (PGD) and
the anterior guide (AGD), to open a recess (RCS) parallel to the vector (V) in the maxilla (MAX), until seated into the anterior guide (AGD), and
at least one gap (GAP), pierced through the guide shell (GDS) between the distanced apart pair of guides (PRGD) and configured for release of the guide shell (GDS) from the maxilla (MAX), wherein the pair of guides (PRGD) is further configured into inverted disposition by disposing of each trough (TRG) of the anterior guide (AGD) and of the posterior guide (PGD) in diametrically opposite disposition relative to the cylindrical body (CB), whereby a moment of forces (M) applied about an axis (Y) perpendicular to a longitudinal axis (X) of the cylindrical body (CB), urges the cylindrical body (CB) into stable and firm support in the pair of guides (PRGD), whereby the cylindrical body (CB) is correctly aligned with the vector (V).

2. The apparatus of claim 1, wherein the anterior guide (AGD) and the posterior guide (PGD) cover at most half, of the periphery of the cylindrical body (CB) and/or wherein the guides (GD) are shaped as a portion of a concave trough (TRG), including a semi-circular (SCRC) shape and a concave V- shape.

3. The apparatus of claim 1, wherein the guide shell (GDS) is configured for zygomatic implantation in a sinus which is one out of an extra maxillary sinus and an intra maxillary sinus.

4. The apparatus of claim 1, wherein a drill guide (DRGD) is configured to be supported and guided by the posterior guide (PGD), and the drill guide (DRGD) axially centers a preliminary drill (PRLDR) supported therein and urged into the anterior guide (AGD), in alignment with the vector (V).

5. The apparatus of claim 1, wherein the guide shell (GDS) is produced by three-dimensional lithographic additive printing and/or the guide shell (GDS) is individually tailor-made in conformance with a topography of the maxilla (MAX).

6. The apparatus of claim 1, wherein the guide shell (GDS) supports at least one pair of guides (PRGD) for one zygomatic implant (ZI).

7. The apparatus of claim 1, wherein the zygomatic implant (ZI) is limited to freedom of motion in rotation and in longitudinal translation by being urged in firm seated disposition into the pair of guides (PRGD).

8. The apparatus of claim 1, wherein at least one out of the pair of guides (PRGD) supports at least one pair of parallel rods (RD) disposed parallel to the vector (V), the rods (RD) forming a guide (GD) for support of a portion of the cylindrical body (CB), and the rods (RD) are made out of material which is one out of a same material and material(s) different from the material(s) of the guide shell (GDS).

9. The apparatus of claim 1, further comprising a slit guide (SLTGD) configured to guide the at least one dedicated dental tool (DDNTL) in alignment with the vector (V), wherein the slit guide (SLTGD) preferably is formed as a slit (SLT) opened in the posterior guide (PGD).

10. The apparatus of claim 9, wherein:
the at least one dedicated dental tool (DDNTL) includes a first dedicated spherical headed burr tool (DBR1) comprising:
an abrasive coated spherical head (SPHD) which is coupled via a neck piece (NCK) supporting a disk (DSK), to a shank (SHNK) which terminates the dedicated burr (DBR1),
wherein:
the neck (NCK) is configured to engage the slit guide (SLTGD) for guidance by the slit (SLT),
the disk (DSK)
is configured for limiting osteotomy perpendicular to the slit, and
the spherical head is configured for osteotomy parallel to the slit (SLT),
and/or
wherein the at least one dedicated dental tool (DDNTL) is a dedicated spherical headed burr tool (DBR1) having a disk (DSK) and a neck (NCK) portion configured for, respectively,
support by the posterior guide (PRG) and guidance by the slit guide (SLTGD).

11. The apparatus of claim 9, wherein the at least one dedicated dental tool (DDNTL) includes a sleeve guide (SLVGD) configured for:
insertion in the slit (SLT) and mechanical releasable affixation to the posterior guide (PGD), and
operation as a drill guide (DRLGD) for a preliminary drill (PRLDR) and operation as a fulcrum whereabout a dedicated spherical headed burr tool (DBR2) is pivoted for osteotomy.

12. The apparatus of claim 9, wherein the guide shell (GDS) is configured to support at least three guides (TRGD) including the pair of guides (PRGD) and the slit guide (SLTGD), and the at least three guides (TRGD) are mutually operative for guiding implantation preparations and for implantation of one zygomatic implant (ZI).

13. The apparatus of claim 9, wherein the slit guide (SLTGD) is formed in the posterior guide (PGD) as at least one pair of parallel slit rods (SLTRD) for disposition parallel to the vector (V), and the slit rods (SLTRD) are made out of material which is one out of a same material and material(s) different from the material(s) of the guide shell (GDS).

14. The apparatus of claim 1, wherein the posterior guide (PGD) is configured for disposition away from the guide shell (GDS) into a maxillary sinus (MXSN), wherein preferably an extension member (XTMB) separates the posterior guide (PGD) away from the guide shell (GDS), wherein preferably the posterior guide (PGD) is affixed to the extension member (XTMB) on a side thereof which faces one out of an anterior side (ANT) and a posterior side (PST).

15. A method for constructing an apparatus (APP) for implanting a zygomatic implant (ZI) in coincidence with an a priori derived vector (V) of implantation by using imaging and computer program facilities, the method being **characterized by** comprising:
providing a dental implantation guide comprising a guide shell (GDS) and at least one dedicated dental tool (DDNTL), wherein the guide shell (GDS) conforms with and in releasable affixation to a portion of a maxillary bone (MAX),
selecting a cylindrical body (CB), which is one out of a zygomatic implant (ZI), a dental drill (DRL), and at least one dedicated dental tool (DDNTL), for use with the guide shell (GDS), disposing the cylindrical body (CB) guides (GD), supported on the guide shell (GDS) which is disposed on a portion of a maxilla (MAX) according to the vector (V), wherein the guide shell (GDS) is configured for:
supporting guides (GD), operating an anterior guide (AGD) in association with a posterior guide (PGD) forming a pair of guides (PRGD), which are shaped as concave troughs (TRG) for receiving the cylindrical body (CB) therein, and are mutually distanced apart and-arranged in inverted support disposition relative to each other,
whereby the troughs (TRG) are inverted by the anterior guide (AGD) and the posterior guide (PGD) being disposed in diametrically opposite disposition on the cylindrical body (CB), and
application of a moment of forces (M) about an axis (Y), perpendicular to a longitudinal axis (X) of the cylindrical body (CB), for urging the cylindrical body (CB) into stable and firm support in the pair of guides (PRGD), whereby the cylindrical body (CB) is coaxially aligned with the vector (V), wherein the at least one dedicated dental tool (DDNTL) includes a dedicated burr (DBR2) comprising:
a smooth spherical head (SMSHD) configured for guidance by the posterior guide (PGD) and operative as a fulcrum,
a cylindrical abrasive body (CYLAB), coupled by a neck (NCK) to the spherical head (SMSHD), and configured for osteotomy,
a shank (SHNK) which is coupled to the body (CYLAB), whereby the dedicated burr (DBR2) is configured for operation in rotation and in pivotal motion about the fulcrum, for motion in a plane defined by the posterior guide (PGD) and the anterior guide (AGD), to open a recess (RCS) parallel to the vector (V) in the maxilla (MAX), until seated into the anterior guide (AGD).

16. The method of claim 15, further **characterized by**:
constructing each one guide (GD) out of the inverted pair of guides (PRGD), which is configured as a trough guide (TRGD), to support the cylindrical body (CB) by at least two points of contact such that two trough guides (TRGD) geometrically align and support the cylindrical body (CB) inserted therein in alignment with the vector (V) on at least four points of contact.

17. The method of claim 16, further **characterized by**:
providing each one guide (GD) configured for independent operation as an independent guide (TRGIN) which includes at least three points of contact (CP) for geometrically aligning and supporting the cylindrical body (CB) inserted therein in alignment with the vector (V).

18. The method of claim 17, further **characterized by**:
providing at least one dedicated dental tool (DDNTL) having a neck (NCK) configured to engage the slit guide (SLTGD) for guidance thereby.

19. The method of claim 15, further **characterized by**:
constructing at least one out of the dedicated dental tools (DDNTL) as a sleeve guide (SLVGD) which is configured to be guided by at least one out of the guides (GD) including a slit guide (SLTGD), the posterior guide (PGD), and both the slit guide (SLTGD) and the posterior guide (PGD), and is further configured to operate as one out of a fulcrum, and a drill guide (DRLGD).

20. The method of claim 15, further **characterized by**:
piercing at least one gap (GAP) through the guide shell (GDS) for release of the guide shell (GDS) from the maxilla (MAX) after implantation of at least one zygomatic implant (ZI)

21. The method of claim 15, further **characterized by**:
constructing_the at least one dedicated dental tool (DDNTL) with a disk (DSK) and a neck (NCK) portion configured for, respectively, support by the posterior guide (PRG) and guidance by the slit guide (SLTGD).

## Patentansprüche

1. Vorrichtung (APP) zur Implantation eines zygomatischen Implantats (ZI) in Übereinstimmung mit einem Implantationsvektor (V), welcher zuvor unter Verwendung von Bildgebungs- und Computerprogrammeinrichtungen abgeleitet wurde, wobei die Vorrichtung (APP) umfasst:
eine zahnmedizinische Implantationsführung, die eine Führungsschale (GDS) und mindestens ein spezielles zahnmedizinisches Werkzeug (DDNTL) umfasst, wobei die Führungsschale (GDS) so konfiguriert ist, dass sie Führungen (GD) trägt und an einen Abschnitt eines Oberkieferknochens (MAX) angepasst und an diesem lösbar zu befestigen ist, wobei die Führungen (GD) eine vordere Führung (AGD) aufweisen, die einer hinteren Führung (PGD) wirksam zugeordnet ist, um ein Paar von Führungen (PRGD) zu bilden, die relativ zueinander beabstandet sind, und mit dem Vektor (V) ausgerichtet sind, und wobei die Führungen (GD) ferner als konkave Mulden (TRG) zum Abstützen eines zylindrischen Körpers (CB) konfiguriert sind, wobei der zylindrische Körper (CB) ausgewählt ist aus einem zygomatischen Implantat (ZI), einem Implantationsbohrer (IMPDR), einem Vorbohrer (DRL) und dem mindestens einen speziellen zahnmedizinischen Werkzeug (DDNTL), das einen speziellen Fräser (DBR2) enthält, aufweisend:
einen glatten kugelförmigen Kopf (SMSHD), der für die Führung durch die hintere Führung (PGD) konfiguriert ist und als Drehpunkt wirksam ist,
einen zylindrischen Schleifkörper (CYLAB), der über einen Hals (NCK) mit dem kugelförmigen Kopf (SMSHD) verbunden und für die Osteotomie konfiguriert ist,
einen Schaft (SHNK), der mit dem Körper (CYLAB) gekoppelt ist, wobei der spezielle Fräser (DBR2) für einen Betrieb in Rotation und in einer Schwenkbewegung um den Drehpunkt konfiguriert ist, für eine Bewegung in einer Ebene, die durch die hintere Führung (PGD) und die vordere Führung (AGD) definiert ist, um eine Vertiefung (RCS) parallel zu dem Vektor (V) in dem Oberkiefer (MAX) zu öffnen, bis zum Sitz in der vorderen Führung (AGD), und
mindestens eine Aussparung (GAP), die durch die Führungsschale (GDS) zwischen dem beabstandeten Paar von Führungen (PRG) hindurchgebohrt und für die Freisetzung der Führungsschale (GDS) von dem Oberkiefer (MAX) konfiguriert ist, wobei das Paar von Führungen (PRG) ferner in umgekehrter Anordnung konfiguriert ist, indem jede Mulde (TRG) der vorderen Führung (AGD) und der hinteren Führung (PGD) in diametral entgegengesetzter Anordnung relativ zu dem zylindrischen Körper (CB) angeordnet ist, wobei ein Kraftmoment (M), das um eine Achse (Y) senkrecht zu einer Längsachse (X) des zylindrischen Körpers (CB) aufgebracht wird, den zylindrischen Körper (CB) in eine stabile und feste Abstützung in dem Paar von Führungen (PRGD) zwingt, wodurch der zylindrische Körper (CB) korrekt mit dem Vektor (V) ausgerichtet ist.

2. Vorrichtung nach Anspruch 1, wobei die vordere Führung (AGD) und die hintere Führung (PGD) höchstens die Hälfte des Umfangs des zylindrischen Körpers (CB) abdecken und/oder wobei die Führungen (GD) als ein Teil einer konkaven Mulde (TRG) geformt sind, umfassend eine halbkreisförmige (SCRC) Form und eine konkave V-Form.

3. Vorrichtung nach Anspruch 1, wobei die Führungsschale (GDS) für die zygomatische Implantation in einen Sinus konfiguriert ist, welcher entweder ein extramaxillärer Sinus oder ein intramaxillärer Sinus ist.

4. Vorrichtung nach Anspruch 1, wobei eine Bohrerführung (DRGD) so konfiguriert ist, dass sie von der hinteren Führung (PGD) getragen und geführt ist, und wobei die Bohrerführung (DRGD) einen darin getragenen und in die vordere Führung (AGD) gezwungenen Vorbohrer (PRLDR) axial, in Ausrichtung mit dem Vektor (V) zentriert .

5. Vorrichtung nach Anspruch 1, wobei die Führungsschale (GDS) durch dreidimensionales lithographisches additives Drucken hergestellt ist und/oder die Führungsschale (GDS) individuell in Anpassung an eine Topographie des Oberkiefers (MAX) maßgeschneidert ist.

6. Vorrichtung nach Anspruch 1, wobei die Führungsschale (GDS) mindestens ein Paar von Führungen (PRGD) für ein zygomatisches Implantat (ZI) trägt.

7. Vorrichtung nach Anspruch 1, bei der das zygomatische Implantat (ZI) in seiner Bewegungsfreiheit in der Rotation und in der Längsverschiebung eingeschränkt ist, indem es in festsitzender Anordnung in das Paar von Führungen (PRGD) gezwungen ist.

8. Vorrichtung nach Anspruch 1, bei der mindestens eine der beiden Führungen (PRGD) mindestens ein Paar parallel zu dem Vektor (V) angeordneter paralleler Stangen (RD) trägt, wobei die Stangen (RD) eine Führung (GD) zur Abstützung eines Teils des zylindrischen Körpers (CB) bilden und die Stangen (RD) aus einem Material hergestellt sind, das entweder dasselbe Material wie das oder die Material(ien) der Führungsschale (GDS) ist oder ein oder mehrere Materialien, das/die sich von dem oder den Materialien der Führungsschale (GDS) unterscheiden.

9. Vorrichtung nach Anspruch 1, die ferner eine Schlitzführung (SLTGD) umfasst, die so konfiguriert ist, dass sie das mindestens eine spezielle zahnmedizinische Werkzeug (DDNTL) in Ausrichtung mit dem Vektor (V) führt, wobei die Schlitzführung (SLTGD) vorzugsweise als ein Schlitz (SLT) ausgebildet ist, der in der hinteren Führung (PGD) geöffnet ist.

10. Vorrichtung nach Anspruch 9, wobei:
das mindestens eine spezielle zahnmedizinische Werkzeug (DDNTL) ein erstes spezielles Fräswerkzeug (DBR1) mit kugelförmigem Kopf umfasst, aufweisend:
einen mit Schleifmittel beschichteten kugelförmigen Kopf (SPHD), der über ein eine Scheibe (DSK) tragendes Halsstück (NCK) mit einem Schaft (SHNK) verbunden ist, welcher ein Ende des speziellen Fräsers (DBR1) bildet,
wobei:
der Hals (NCK) so konfiguriert ist, dass er in die Schlitzführung (SLTGD) zur Führung durch den Schlitz (SLT) eingreift,
die Scheibe (DSK) für die Begrenzung der Osteotomie senkrecht zu dem Schlitz konfiguriert ist, und
der kugelförmige Kopf für eine Osteotomie parallel zu dem Schlitz (SLT) konfiguriert ist,
und/oder
wobei das mindestens eine spezielle zahnmedizinische Werkzeug (DDNTL) ein spezielles Fräswerkzeug (DBR1) mit kugelförmigem Kopf ist, das eine Scheibe (DSK) und einen Halsabschnitt (NCK) aufweist, die für die Abstützung durch die hintere Führung (PRG) bzw. die Führung durch die Schlitzführung (SLTGD) konfiguriert sind.

11. Vorrichtung nach Anspruch 9, wobei das mindestens eine spezielle zahnmedizinische Werkzeug (DDNTL) eine Hülsenführung (SLVGD) aufweist, die konfiguriert ist für:
das Einsetzen in den Schlitz (SLT) und die mechanisch lösbare Befestigung an der hinteren Führung (PGD), und den Betrieb als eine Bohrerführung (DRLGD) für einen Vorbohrer (PRLDR) und den Betrieb als einen Drehpunkt, um den ein spezielles Fräswerkzeug (DBR2) mit kugelförmigem Kopf für die Osteotomie geschwenkt wird.

12. Vorrichtung nach Anspruch 9, wobei die Führungsschale (GDS) so konfiguriert ist, dass sie mindestens drei Führungen (TRGD), enthaltend das Führungspaar (PRGD) und die Schlitzführung (SLTGD), trägt, und wobei die mindestens drei Führungen (TRGD) gegenseitig zur Führung von Implantationspräparaten und zur Implantation eines zygomatischen Implantats (ZI) wirksam sind.

13. Vorrichtung nach Anspruch 9, wobei die Schlitzführung (SLTGD) in der hinteren Führung (PGD) als mindestens ein Paar paralleler Schlitzstangen (SLTRD) zur Anordnung parallel zu dem Vektor (V) ausgebildet ist und die Schlitzstangen (SLTRD) aus einem Material hergestellt sind, wobei das Material ausgewählt ist aus demselben Material und einem oder mehreren Materialien, die sich von dem oder den Materialien der Führungsschale (GDS) unterscheiden.

14. Vorrichtung nach Anspruch 1, wobei die hintere Führung (PGD) so konfiguriert ist, dass sie von der Führungshülse (GDS) weg in einen Sinus maxillaris (MXSN) angeordnet werden kann, wobei vorzugsweise ein Verlängerungselement (XTMB) die hintere Führung (PGD) von der Führungsschale (GDS) weg trennt, wobei vorzugsweise die hintere Führung (PGD) an dem Verlängerungselement (XTMB) auf einer Seite davon befestigt ist, die einer von einer vorderen Seite (ANT) und einer hinteren Seite (PST) zugewandt ist.

15. Verfahren zur Konstruktion einer Vorrichtung (APP) zum Implantieren eines zygomatischen Implantats (ZI) in Übereinstimmung mit einem Implantationsvektor (V), der zuvor unter Verwenden von Bildgebungs- und Computerprogrammeinrichtungen abgeleitet wurde, wobei das Verfahren **dadurch gekennzeichnet ist, dass** es umfasst:
Bereitstellen einer zahnmedizinischen Implantationsführung aufweisend eine Führungsschale (GDS) und mindestens ein spezielles zahnmedizinisches Werkzeug (DDNTL), wobei die Führungsschale (GDS) an einen Abschnitt eines Oberkieferknochens (MAX) angepasst und lösbar an diesem zu befestigen ist,
Auswählen eines zylindrischen Körpers (CB), der ausgewählt ist aus einem zygomatischen Implantat (ZI), einem Dentalbohrer (DRL) und mindestens einem speziellen zahnmedizinischen Werkzeug (DDNTL), zur Verwendung mit der Führungsschale (GDS), Anordnen der Führungen (GD) des zylindrischen Körpers (CB), die auf der Führungsschale (GDS) getragen sind, welche auf einem Abschnitt eines Oberkiefers (MAX) gemäß dem Vektor (V) angeordnet ist, wobei die Führungsschale (GDS) konfiguriert ist für:
das Tragen von Führungen (GD), die als eine vordere Führung (AGD) in Verbindung mit einer hinteren Führung (PGD) wirken, und ein Paar von Führungen (PRGD) bilden, die als konkave Mulden (TRG) zur Aufnahme des zylindrischen Körpers (CB) darin geformt sind, und die gegenseitig voneinander beabstandet und in umgekehrter Trageanordnung relativ zueinander angeordnet sind,
wodurch die Mulden (TRG) durch die vordere Führung (AGD) und die hintere Führung (PGD), die in diametral entgegengesetzter Anordnung auf dem zylindrischen Körper (CB) angeordnet sind, umgekehrt sind, und Aufbringen eines Kraftmoments (M) um eine Achse (Y), die senkrecht zu einer Längsachse (X) des zylindrischen Körpers (CB) verläuft, um den zylindrischen Körper (CB) in eine stabile und feste Abstützung in dem Paar von Führungen (PRGD) zu zwingen, wodurch der zylindrische Körper (CB) koaxial mit dem Vektor (V) ausgerichtet ist, wobei das mindestens eine spezielle zahnmedizinische Werkzeug (DDNTL) einen speziellen Fräser (DBR2) umfasst, aufweisend:
einen glatten kugelförmigen Kopf (SMSHD), der für die Führung durch die hintere Führung (PGD) konfiguriert ist und als Drehpunkt wirksam ist,
einen zylindrischen Schleifkörper (CYLAB), der über einen Hals (NCK) mit dem kugelförmigen Kopf (SMSHD) verbunden und für die Osteotomie konfiguriert ist,
einen Schaft (SHNK), der mit dem Körper (CYLAB) gekoppelt ist, wobei der spezielle Fräser (DBR2) für einen Betrieb in Rotation und in einer Schwenkbewegung um den Drehpunkt konfiguriert ist, für eine Bewegung in einer Ebene, die durch die hintere Führung (PGD) und die vordere Führung (AGD) definiert ist, um eine Vertiefung (RCS) parallel zu dem Vektor (V) in dem Oberkiefer (MAX) zu öffnen, bis zum Sitz in der vorderen Führung (AGD).

16. Verfahren nach Anspruch 15, ferner **gekennzeichnet durch**:
Konstruieren jeder einzelnen Führung (GD), aus dem umgekehrten Paar von Führungen (PRGD), welche als eine Muldenführung (TRGD) konfiguriert ist, um den zylindrischen Körper (CB) durch mindestens zwei Berührungspunkte derart zu stützen, dass zwei Muldenführungen (TRGD) den darin eingesetzten zylindrischen Körper (CB) in Ausrichtung mit dem Vektor (V) an mindestens vier Berührungspunkten geometrisch ausrichten und stützen.

17. Verfahren nach Anspruch 16, ferner **gekennzeichnet durch**:
Bereitstellen jeder einzelnen Führung (GD), die für den unabhängigen Betrieb als eine unabhängige Führung (TRGIN)konfiguriert ist, , aufweisend mindestens drei Berührungspunkte (CP) zum geometrischen Ausrichten und Abstützen des darin eingesetzten zylindrischen Körpers (CB) in Ausrichtung mit dem Vektor (V).

18. Verfahren nach Anspruch 17, ferner **gekennzeichnet durch**:
Bereitstellen mindestens eines speziellen zahnmedizinischen Werkzeugs (DDNTL), das einen Hals (NCK) aufweist, der so konfiguriert ist, dass er in die Schlitzführung (SLTGD) zur Führung dadurch eingreift.

19. Verfahren nach Anspruch 15, ferner **gekennzeichnet durch**:
Konstruieren mindestens eines von den speziellen zahnmedizinischen Werkzeugen (DDNTL) als eine Hülsenführung (SLVGD), die so konfiguriert ist, dass sie von mindestens einer der Führungen (GD), einschließlich einer Schlitzführung (SLTGD), der hinteren Führung (PGD) und sowohl der Schlitzführung (SLTGD) als auch der hinteren Führung (PGD), geführt wird, und die ferner so konfiguriert ist, dass sie entweder als Drehpunkt oder als Bohrerführung (DRLGD) wirksam ist.

20. Verfahren nach Anspruch 15, ferner **gekennzeichnet durch**:
Durchbohren von mindestens einer Aussparung (GAP) durch die Führungsschale (GDS), um die Führungsschale (GDS) nach der Implantation mindestens eines zygomatischen Implantats (ZI) von dem Oberkiefer (MAX) freizusetzen.

21. Verfahren nach Anspruch 15, ferner **gekennzeichnet durch**:
Konstruieren des mindestens einen speziellen zahnmedizinischen Werkzeugs (DDNTL) mit einer Scheibe (DSK) und einem Halsabschnitt (NCK), die für die Abstützung durch die hintere Führung (PRG) bzw. die Führung durch die Schlitzführung (SLTGD) konfiguriert sind.

## Revendications

1. Appareil (APP) destiné à l'implantation d'un implant zygomatique (ZI) en coïncidence avec un vecteur d'implantation (V) dérivé précédemment en utilisant un service de programme d'imagerie et informatique, dans lequel l'appareil (APP) comprend :
un guide d'implantation dentaire comprenant une coque de guidage (GDS) et au moins un outil dentaire (DDNTL) dédié, la coque de guidage (GDS) étant configurée pour supporter des guides (GD) et pour se conformer à et se fixer de manière amovible à une partie d'un os maxillaire (MAX), les guides (GD) ayant un guide antérieur (AGD) pouvant fonctionner en association avec un guide postérieur (PGD) pour former une paire de guides (PRGD) qui sont espacés l'un par rapport à l'autre, et sont alignés avec le vecteur (V), et lesquels guides (GD) sont en outre configurés en tant que creux concaves (TRG) pour le support d'un corps cylindrique (CB) qui est l'un d'un implant zygomatique (ZI), d'un foret d'implantation (IMPDR), d'un foret préliminaire (DRL) et l'au moins un outil dentaire (DDNTL) dédié qui inclut une fraise (DBR2) dédiée, comprenant :
une tête sphérique lisse (SMSHD) configuré pour être guidée par le guide postérieur (PGD) et fonctionnant en tant que pivot,
un corps abrasif cylindrique (CYLAB), couplé par un collet (NCK) à la tête sphérique (SMSHD) et configuré pour l'ostéotomie,
une branche (SHNK) qui est couplée au corps (CYLAB), ce par quoi la fraise (DBR2) est configurée pour fonctionner en rotation et en mouvement de pivotement sur le pivot, pour le déplacement dans un plan défini par le guide postérieur (PGD) et le guide antérieur (AGD), pour ouvrir un creux (RCS) parallèle au vecteur (V) dans le maxillaire (MAX), jusqu'à être logée dans le guide antérieur (AGD), et
au moins un espace (GAP) percé à travers la coque de guidage (GDS) entre la paire de guides (PRG) espacés, et configuré pour libérer la coque de guidage (GDS) du maxillaire (MAX), dans lequel la paire de guides (PRG) est en outre configurée en disposition inversée en disposant chaque creux (TRG) du guide antérieur (AGD) et du guide postérieur (PGD) en disposition diamétralement opposée au corps cylindrique (CB), et ce par quoi un moment de forces (M) appliqué sur un axe (Y) perpendiculaire à un axe longitudinal (X) du corps cylindrique (CB) force le corps cylindrique (CB) en un support stable et ferme dans la paire de guides (PRGD), ce par quoi le corps cylindrique (CB) est aligné correctement avec le vecteur (V).

2. Appareil selon la revendication 1, dans lequel le guide antérieur (AGD) et le guide postérieur (PGD) couvrent au plus la moitié de la périphérie du corps cylindrique (CB) et/ou dans lequel les guides (GD) sont formés en tant qu'une partie d'un creux concave (TRG), incluant une forme semi-circulaire (SCRC) et une forme concave en V.

3. Appareil selon la revendication 1, dans lequel la coque de guidage (GDS) est configurée pour l'implantation zygomatique dans un sinus qui est l'un d'un sinus extra maxillaire et d'un sinus intra maxillaire.

4. Appareil selon la revendication 1, dans lequel un guide-foret (DRGD) est configuré pour être supporté et guidé par le guide postérieur (PGD), et le guide-foret (DRGD) centre axialement un foret préliminaire (PRLDR) supporté à l'intérieur et poussé dans le guide antérieur (AGD), en alignement avec le vecteur (V).

5. Appareil selon la revendication 1, dans lequel la coque de guidage (GDS) est produite par impression additive lithographique tridimensionnelle et/ou la coque de guidage (GDS) est taillée sur mesure individuellement en se conformant à une topographie du maxillaire (MAX).

6. Appareil selon la revendication 1, dans lequel la coque de guidage (GDS) supporte au moins une paire de guides (PRGD) pour un implant zygomatique (ZI).

7. Appareil selon la revendication 1, dans lequel l'implant zygomatique (ZI) est limité à la liberté de mouvement en rotation et en translation longitudinale en étant poussé en disposition logée fermement jusque dans la paire de guides (PRGD).

8. Appareil selon la revendication 1, dans lequel au moins une de la paire de guides (PRGD) supporte au moins une paire de tiges parallèles (RG) disposées parallèlement au vecteur (V), les tiges (RD) formant un guide (GD) pour le support d'une partie du corps cylindrique (CB), et les tiges (RD) sont faites d'un matériau qui est l'un d'un même matériau et de matériau/x différent/s du/des matériau/x de la coque de guidage (GDS).

9. Appareil selon la revendication 1, comprenant en outre un guide fendu (SLTGD) configuré pour guider l'au moins un outil dentaire (DDNTL) dédié en alignement avec le vecteur (V), dans lequel le guide fendu (SLTGD) est formé de préférence en tant qu'une fente (SLT) ouverte dans le guide postérieur (PGD).

10. Appareil selon la revendication 9, dans lequel :
l'au moins un outil dentaire (DDNTL) dédié inclut un premier outil de fraisage à tête sphérique (DBR1) comprenant :
une tête sphérique revêtue d'abrasif (SPHD) qui est couplée par le biais d'une pièce de collet (NCK) supportant un disque (DSK), à une branche (SHNK) qui finit la fraise (DBR1) dédiée,
dans lequel :
le collet (NCK) est configuré pour engager le guide fendu (SLTGD) pour être guidé par la fente (SLT),
le disque (DSK) est configuré pour limiter l'ostéotomie perpendiculaire à la fente, et
la tête sphérique est configurée pour l'ostéotomie parallèle à la fente (SLT),
et/ou
dans lequel l'au moins un outil dentaire (DDNTL) dédié est un outil de fraisage à tête sphérique (DBR1) dédié ayant un disque (DSK) et une partie de collet (NCK) configurée pour, respectivement, le support par le guide postérieur (PRG) et le guidage par le guide fendu(SLTGD).

11. Appareil selon la revendication 9, dans lequel l'au moins un outil dentaire (DDNTL) dédié inclut un guide-manchon (SLVGD) configuré pour :
l'insertion dans la fente (SLT) et la fixation mécanique amovible sur le guide postérieur (PGD) et le fonctionnement en tant qu'un guide-foret (DRLGD) pour un foret préliminaire (PRLDR) et le fonctionnement en tant qu'un pivot autour duquel un outil de fraisage à tête sphérique (DBR2) dédié est pivoté pour l'ostéotomie.

12. Appareil selon la revendication 9, dans lequel la coque de guidage (GDS) est configurée pour supporter au moins trois guides (TRGD) incluant la paire de guides (PRGD) et le guide fendu (SLTGD), et les au moins trois guides (TRGD) peuvent fonctionner mutuellement pour guider les préparations d'implantation et pour l'implantation d'un implant zygomatique (ZI).

13. Appareil selon la revendication 9, dans lequel le guide fendu (SLTGD) est formé dans le guide postérieur (PGD) en tant qu'au moins une paire de tiges fendues parallèles (SLTRD) pour la disposition parallèle au vecteur (V), et les tiges fendues (SLTRD) sont faites d'un matériau qui est l'un d'un même matériau et de matériau/x différent/s du/des matériau/x de la coque de guidage (GDS).

14. Appareil selon la revendication 1, dans lequel le guide postérieur (PGD) est configuré pour être disposé à distance de la coque de guidage (GDS) dans un sinus maxillaire (MXSN), dans lequel de préférence un membre d'extension (XTMB) sépare le guide postérieur (PGD) à distance de la coque de guidage (GDS), dans lequel de préférence le guide postérieur (PGD) est fixé sur le membre d'extension (XTMB) sur un côté de celui-ci qui fait face à un d'un côté antérieur (ANT) et d'un côté postérieur (PST).

15. Procédé pour construire un appareil (APP) pour implanter un implant zygomatique (ZI) en coïncidence avec un vecteur dérivé (V) à priori d'implantation en utilisant un service de programme d'imagerie et informatique, le procédé étant **caractérisé en ce qu'**il comprend :
de fournir un guide d'implantation dentaire comprenant une coque de guidage (GDS) et au moins un outil dentaire (DDNTL) dédié, la coque de guidage (GDS) se conformant à et se fixant de manière amovible à un os maxillaire (MAX),
de sélectionner un d'un corps cylindrique (CB) qui est l'un d'un implant zygomatique (ZI), d'un foret dentaire (DRL) et au moins un outil dentaire (DDNTL) dédié pour utilisation avec la coque de guidage (GDS), en disposant les guides (GD) du corps cylindrique (CB), supportés sur la coque de guidage (GDS) qui est disposée sur une partie d'un maxillaire (MAX) selon le vecteur (V), dans lequel la coque de guidage (GDS) est configurée pour :
supporter des guides (GD), en faisant fonctionner un guide antérieur (AGD) en association avec un guide postérieur (PGD) formant une paire de guides (PRGD) qui sont formés en tant que creux concaves (TRG) pour recevoir le corps cylindrique (CB) à l'intérieur, et sont espacés mutuellement et agencés en disposition de support inversée l'un par rapport à l'autre,
ce par quoi les creux (TGR) sont inversés par le guide antérieur (AGD) et le guide postérieur (PGD) étant disposés en disposition diamétralement opposée sur le corps cylindrique (CB), et l'application d'un moment de forces (M) appliqué sur un axe (Y) perpendiculaire à un axe longitudinal (X) du corps cylindrique (CB) pour forcer le corps cylindrique (CB) en un support stable et ferme dans la paire de guides (PRGD), ce par quoi le corps cylindrique (CB) est aligné coaxialement avec le vecteur (V), dans lequel l'au moins un outil dentaire (DDNTL) dédié inclut une fraise dédiée (DBR2) comprenant :
une tête sphérique lisse (SMSHD) configurée pour être guidée par le guide postérieur (PGD) et pouvant fonctionner en tant que pivot,
un corps cylindrique abrasif (CYLAB), couplé par un collet (NCK) à la tête sphérique (SMSHD) et configuré pour l'ostéotomie,
une branche (SHNK) qui est couplée au corps (CYLAB), ce par quoi la fraise (DBR2) est configurée pour fonctionner en rotation et en mouvement de pivotement sur le pivot, pour le déplacement dans un plan défini par le guide postérieur (PGD) et le guide antérieur (AGD), pour ouvrir un creux (RCS) parallèle au vecteur (V) dans le maxillaire (MAX), jusqu'à être logée dans le guide antérieur (AGD) .

16. Procédé selon la revendication 15, **caractérisé en outre par** :
la construction de chaque un guide (GD) à partir de la paire de guide (PRGD) inversée qui est configurée en tant qu'un guide creux (TRGD), pour supporter le corps cylindrique (CB) par au moins deux points de contact de telle façon que deux guides creux (TRGD) s'alignent géométriquement et supportent le corps cylindrique (CB) inséré à l'intérieur en alignement avec le vecteur (V) sur au moins quatre points de contact.

17. Procédé selon la revendication 16, **caractérisé en outre par** :
la fourniture de chaque un guide (GD) configuré pour le fonctionnement indépendant en tant qu'un guide indépendant (TRGIN) qui inclut au moins trois points de contact (CP) pour l'alignement géométrique et le support du corps cylindrique (CB) inséré à l'intérieur en alignement avec le vecteur (V).

18. Procédé selon la revendication 17, **caractérisé en outre par** :
la fourniture d'au moins un outil dentaire (DDNTL) dédié ayant un collet (NCK) configuré pour engager le guide fendu (SLTGD) pour être guidé au travers.

19. Procédé selon la revendication 15, **caractérisé en outre par** :
la construction d'au moins un des outils dentaires (DDNTL) dédiés en tant qu'un guide-manchon (SLVGD) qui est configuré pour être guidé par au moins un des guides (GD) incluant un guide fendu (SLTGD), le guide postérieur (PGD) et à la fois le guide fendu (SLTGD) et le guide postérieur (PGD), et est en outre configuré pour fonctionner en tant que l'un d'un pivot, et d'un guide-foret (DRLGD).

20. Procédé selon la revendication 15, **caractérisé en outre par** :
le perçage d'au moins un espace (GAP) à travers la coque de guidage (GDS) pour libérer la coque de guidage (GDS) du maxillaire (MAX) après l'implantation d'au moins un implant zygomatique (ZI).

21. Procédé selon la revendication 15, **caractérisé en outre par** :
la construction d'au moins un outil dentaire (DDNTL) dédié avec un disque (DSK) et une partie de collet (NCK) configurée pour, respectivement, le support par le guide postérieur (PRG) et le guidage par le guide fendu (SLTGD).
